(19) Europäisches Patentamt
European Patent Office
Office européen des brevets

(11) **EP 4 520 776 A1**

(12) **EUROPEAN PATENT APPLICATION**

(43) Date of publication:
**12.03.2025 Bulletin 2025/11**

(21) Application number: **24190246.9**

(22) Date of filing: **23.07.2024**

(51) International Patent Classification (IPC):
***C08G 63/183*** *(2006.01)* ***C08L 67/04*** *(2006.01)*
***D01F 6/84*** *(2006.01)* ***D01F 8/14*** *(2006.01)*

(52) Cooperative Patent Classification (CPC):
(C-Sets available)
**C08G 63/183; C08L 67/04; D01F 6/62; D01F 6/84; D01F 6/92; D01F 8/14** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 KR 20230117457**
**05.09.2023 KR 20230117458**

(71) Applicant: **SK leaveo Co., Ltd.**
**Gyeonggi-do 16338 (KR)**

(72) Inventors:
- **LEE, Hyeri**
  **16338 Suwon-si, Gyeonggi-do (KR)**
- **KIM, Kyung Youn**
  **16338 Suwon-si, Gyeonggi-do (KR)**
- **KIM, Seong Dong**
  **16338 Suwon-si, Gyeonggi-do (KR)**
- **YOU, Kyoung Hwan**
  **16338 Suwon-si, Gyeonggi-do (KR)**
- **KIM, Hoon**
  **16338 Suwon-si, Gyeonggi-do (KR)**
- **BYEON, Jun Su**
  **16338 Suwon-si, Gyeonggi-do (KR)**
- **LEE, Moon Hyun**
  **16338 Suwon-si, Gyeonggi-do (KR)**

(74) Representative: **Isarpatent**
**Patent- und Rechtsanwälte**
**Barth Hassa Peckmann & Partner mbB**
**Friedrichstraße 31**
**80801 München (DE)**

# (54) ECO-FRIENDLY BIODEGRADABLE RESIN COMPOSITION AND BIODEGRADABLE NONWOVEN FABRIC

(57) Embodiments of the present invention provide an eco-friendly biodegradable resin composition that includes a first biodegradable resin including diol, aromatic dicarboxylic acid and aliphatic dicarboxylic acid and has a melt index change value of 45 g/10 min or less according to the disclosed measurement methods, a method of preparing the biodegradable resin composition, and a biodegradable molded article manufactured by the method.

Embodiments of the present invention provide a method of manufacturing an eco-friendly biodegradable nonwoven fabric, the method including spinning a biodegradable resin composition to manufacture biodegradable yarns; cooling the biodegradable yarns; and combining the cooled biodegradable yarns to form a biodegradable yarn web, wherein the biodegradable resin composition includes a first biodegradable resin, the first biodegradable resin includes diol, aromatic dicarboxylic acid and aliphatic dicarboxylic acid, and the biodegradable resin composition has a crystallization temperature of 70 °C to 130 °C,; a biodegradable yarn; and a biodegradable nonwoven fabric including the biodegradable yarn.

【FIG. 1】

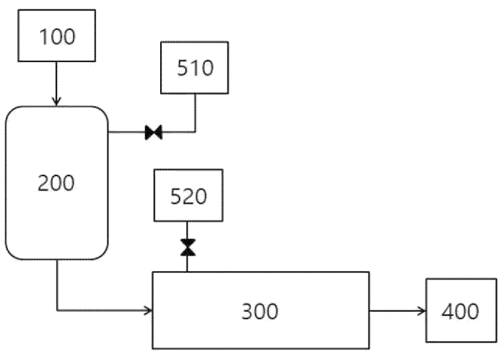




Processed by Luminess, 75001 PARIS (FR)

(Cont. next page)

(52) Cooperative Patent Classification (CPC): (Cont.)

C-Sets
**C08L 67/04, C08L 67/02, C08L 1/02**

## Description

Technical Field

Embodiments of the present invention generally relate to an eco-friendly biodegradable resin composition, a method of preparing the same, and a biodegradable molded article manufactured thereby.
In addition, embodiments of the present invention relate to a method of manufacturing an eco-friendly biodegradable nonwoven fabric, a biodegradable yarn and a biodegradable nonwoven fabric including the same.

[Background Art]

Recently, as concerns about environmental issues have increased, solutions to the disposal of various household goods, especially disposable products, are required. Specifically, petroleum-based polymer materials are inexpensive and have excellent processability, so they are widely used to manufacture various products such as films, fibers, packaging materials, bottles, and containers. However, products made from the petroleum-based polymer materials emit harmful substances when incinerated at the end of lifespan thereof. In addition, depending on the types of products, it takes hundreds of years to completely decompose naturally.
To overcome these limitations of petroleum-based polymer materials, research is being actively conducted on biodegradable resins that decompose in a relatively short period. Polylactic acid (PLA), polybutylene adipate terephthalate (PBAT), and polybutylene succinate (PBS) are being introduced as biodegradable resins.
In particular, nonwoven fabric is a material that can be used in a variety of products, and the need for manufacturing eco-friendly nonwoven fabric is increasing. However, when fibers are manufactured using a biodegradable resin to produce nonwoven fabric, there are complications in that the fibers are easily cut, or beads are formed. In addition, when using biodegradable resin as a raw material, it is difficult to implement a process of continuously manufacturing fibers, and quality deteriorates due to increased thickness or decreased uniformity of manufactured fibers.
Therefore, the present invention has been made in view of the above concerns, and embodiments of the present invention provide a biodegradable resin composition that has improved strength and elongation, excellent spinning ability, and is eco-friendly. Thus, a method of preparing the biodegradable resin composition, and a biodegradable molded article manufactured by the method are provided.

Summary

Embodiments of the present invention provide a method of manufacturing a biodegradable nonwoven fabric having improved strength and elongation, excellent spinning ability, and is eco-friendly, a biodegradable yarn and a biodegradable nonwoven fabric including the biodegradable yarn.
In accordance with embodiments of the present invention, the above and other objects can be accomplished by the provision of an eco-friendly biodegradable resin composition, including a first biodegradable resin including diol, aromatic dicarboxylic acid and aliphatic dicarboxylic acid, wherein the biodegradable resin composition has a melt index change value of 45 g/10 min or less according to a measurement method below:
Measurement method

1) a first melt index of the biodegradable resin composition is measured under conditions of 190 °C and 2.16 kg, and a second melt index of the biodegradable resin composition is measured under conditions of 250 °C and 2.16 kg, and
2) a melt index change value is derived by Equation 1 below:

Equation 1

$$\text{Melt index change value} = \text{Second melt index} - \text{First melt index}$$

where the first melt index is 6 g/10 min or more.

In an embodiment of the present invention, the biodegradable resin may have a weight average molecular weight ("Mw") of 70,000 g/mol to 90,000 g/mol.
In an embodiment of the present invention, the biodegradable resin may have a number average molecular weight ("Mn") of 33,000 g/mol to 40,000 g/mol.
In an embodiment of the present invention, the biodegradable resin may have a polydispersity index ("Mw/Mn") of 2.0 to 2.5.
In an embodiment of the present invention, the biodegradable resin composition may satisfy Relationship 1

below:

Relationship 1

$$MI = 0.625T - 105.35$$

where MI denotes a melt index, and T is 190 °C to 250 °C.

In accordance with another embodiment of the present invention, there is provided a method of preparing an eco-friendly biodegradable resin composition, the method including preparing a first prepolymer by performing a first esterification reaction of a first raw material composition including diol and aromatic dicarboxylic acid; preparing a second prepolymer by performing a second esterification reaction of a second raw material composition including the first prepolymer and aliphatic dicarboxylic acid; and preparing a biodegradable resin composition by condensation-polymerizing the second prepolymer, wherein the biodegradable resin composition has a melt index change value of 45 g/10 min or less according to a measurement method below:

Measurement method

1) a first melt index of the biodegradable resin composition is measured under conditions of 190 °C and 2.16 kg, and a second melt index of the biodegradable resin composition is measured under conditions of 250 °C and 2.16 kg,
2) a melt index change value is derived by Equation 1 below:

Equation 1

$$\text{Melt index change value} = \text{Second melt index} - \text{First melt index}$$

where the first melt index is 6 g/10 min or more.

In an embodiment of the present invention, in the preparing of the biodegradable resin composition, the second prepolymer may be condensation-polymerized for 280 minutes to 320 minutes in an agitator.

In an embodiment of the present invention, an Ampere value in the agitator may be greater than 110 and less than 150.

In an embodiment of the present invention, an intrinsic viscosity of the condensation-polymerized second prepolymer at 190 °C may be 0.9 dl/g to 2.0 dl/g.

In accordance with still another embodiment of the present invention, there is provided an eco-friendly biodegradable molded article, including a biodegradable resin composition including a first biodegradable resin that includes diol, aromatic dicarboxylic acid and aliphatic dicarboxylic acid, wherein the biodegradable resin composition has a melt index change value of 45 g/10 min or less according to a measurement method below:

Measurement method

1) a first melt index of the biodegradable resin composition is measured under conditions of 190 °C and 2.16 kg, and a second melt index of the biodegradable resin composition is measured under conditions of 250 °C and 2.16 kg,
2) a melt index change value is derived by Equation 1 below:

Equation 1

$$\text{Melt index change value} = \text{Second melt index} - \text{First melt index}$$

where the first melt index is 6 g/10 min or more.

In accordance with still another embodiment of the present invention, there is provided a method of manufacturing an eco-friendly biodegradable nonwoven fabric, the method including spinning a biodegradable resin composition to manufacture a biodegradable yarn, cooling the biodegradable yarn; and combining the cooled biodegradable yarns to form a biodegradable yarn web, wherein the biodegradable resin composition includes a first biodegradable resin, the first biodegradable resin includes diol, aromatic dicarboxylic acid and aliphatic dicarboxylic acid, and the biodegradable resin composition has a crystallization temperature of 70 °C to 130 °C.

In an embodiment of the present invention, the method of manufacturing a biodegradable nonwoven fabric may further include combining the biodegradable yarn webs in at least one process of needle punch, spun lace, stitch bond, calendaring, and air through bonding.

In accordance with another embodiment of the present invention, there is provided an eco-friendly biodegradable

yarn including a biodegradable resin composition that includes a first biodegradable resin, wherein the first biodegradable resin includes diol, aromatic dicarboxylic acid and aliphatic dicarboxylic acid, and the biodegradable resin composition has a crystallization temperature of 70 °C to 130 °C.

In an embodiment of the present invention, the biodegradable resin composition may include a second biodegradable resin, wherein the second biodegradable resin includes one or more selected from the group consisting of polybutylenesuccinate, polylactic acid, polybutyleneadipate, polybutylenesuccinate-adipate, polybutylenesuccinate-terephthalate, polyhydroxybutyrate-valerate, polycapro, polybutyleneadipate-co-butylenesuccinate terephthalate and polybutylene succinate adipate terephthalate.

In an embodiment of the present invention, a weight ratio of the first biodegradable resin to the second biodegradable resin may be 5:95 to 50:50.

In an embodiment of the present invention, a chain extender may be included in a content of 1,000 ppm to 5,000 ppm based on a total weight of the biodegradable resin composition.

In an embodiment of the present invention, the biodegradable yarn may have a tensile strength of 1.0 g/de to 3.0 g/de and an elongation of 35 % to 200 %.

In an embodiment of the present invention, the biodegradable yarn may have an average diameter of 10 $\mu$m to 100 $\mu$m.

In an embodiment of the present invention, a melt index of the biodegradable resin composition measured under conditions of 190 °C and 2.16 kg may be 6 g/10 min to 10 g/10 min.

In an embodiment of the present invention, a difference between a melting temperature of the biodegradable resin composition and the crystallization temperature thereof may be 40 °C to 75 °C.

In accordance with yet another embodiment of the present invention, there is provided an eco-friendly biodegradable nonwoven fabric including a biodegradable yarn having an average diameter of 10 $\mu$m to 100 $\mu$m, wherein the biodegradable yarn includes a biodegradable resin composition including a first biodegradable resin, the first biodegradable resin includes diol, aromatic dicarboxylic acid and aliphatic dicarboxylic acid, and the biodegradable resin composition has a crystallization temperature of 70 °C to 130 °C.

[Advantageous effects]

An eco-friendly biodegradable molded article manufactured from a biodegradable resin made from a biodegradable resin composition according to the present invention can be naturally biodegraded at the end of its lifespan, so it does not require incineration or emit harmful substances.

In addition, since the eco-friendly biodegradable resin composition according to embodiments of the present invention satisfies a specific melt index range in a melt spinning temperature range, the amount of the biodegradable resin composition discharged during a spinning process is uniform, so that it can have excellent spinning ability. Accordingly, the yarn of a biodegradable nonwoven fabric manufactured from the biodegradable resin composition is not broken and has a uniform diameter, excellent strength, and elongation.

Further, since the eco-friendly biodegradable resin composition according to embodiments of the present invention has a crystallization temperature in a specific range, the amount of the biodegradable resin composition discharged during a spinning process is uniform, so that it can have excellent spinning ability. Accordingly, the yarn of a biodegradable nonwoven fabric manufactured from the biodegradable resin composition is not broken, can contain short or long fibers having a uniform diameter, and can have excellent tensile strength and elongation.

Other features and aspects of embodiments of the present invention will be apparent from the following detailed description, the drawings, and the claims.

Brief Description of Drawings

FIG. 1 schematically illustrates an apparatus for preparing a biodegradable resin composition according to an embodiment of the present invention.

Detailed Description

Structural or functional descriptions of embodiments disclosed in the present specification are merely illustrated for the purpose of describing the embodiments according to the technical idea of the present invention, embodiments according to the technical idea of the present invention may be implemented in various forms other than the embodiments disclosed in the present specification, and it is not to be construed that the technical idea of the present invention is limited to the embodiments described in the present specification.

In the present specification, when a certain component is "included", this indicates that only the component is included or the component may further include another component unless there is no different disclosure. In addition, it should be understood that all numerical ranges representing physical property values, dimensions, etc. of components described in the present specification are modified by the term 'about' in all cases unless otherwise specified. In addition, in this specification, 'ppm' refers to weight basis.

A biodegradable resin composition according to an embodiment of the present invention includes a first biodegradable resin including diol, aromatic dicarboxylic acid and aliphatic dicarboxylic acid, and has a melt index change value of 45 g/10 min or less according to the following measurement method:
Measurement method

1) a first melt index of the biodegradable resin composition is measured under conditions of 190 °C and 2.16 kg, and a second melt index of the biodegradable resin composition is measured under conditions of 250 °C and 2.16 kg,
2) a melt index change value is derived by Equation 1 below:

Equation 1

$$\text{Melt index change value} = \text{Second melt index} - \text{First melt index}$$

where the first melt index is 6 g/10 min or more.

The biodegradable resin composition according to an embodiment of the present invention includes a first biodegradable resin. The first biodegradable resin includes diol, aromatic dicarboxylic acid, and aliphatic dicarboxylic acid.

The first biodegradable resin may include a diol residue, an aromatic dicarboxylic acid residue and an aliphatic dicarboxylic acid residue. The diol residue may be derived from the diol, the aromatic dicarboxylic acid residue may be derived from the aromatic dicarboxylic acid, and the aliphatic dicarboxylic acid residue may be derived from the aliphatic dicarboxylic acid. The first biodegradable resin may include a diol component, an aromatic dicarboxylic acid component and an aliphatic dicarboxylic acid component. The diol component may be derived from the diol, the aromatic dicarboxylic acid component may be derived from the aromatic dicarboxylic acid, and the aliphatic dicarboxylic acid component may be derived from the aliphatic dicarboxylic acid.

In this specification, the diol residue may also be referred to as diol. In this specification, the dicarboxylic acid residue may also be referred to as dicarboxylic acid. In this specification, the residue may also be expressed as a component.

The diol may be an aliphatic diol. The diol may be a bio-derived diol. The diol may be at least one selected from the group consisting of ethanediol, 1,2-propanediol, 1,3-propanediol, 2-methyl-1,3-propanediol, 2,2-dimethyl-1,3-propanediol, 2,2-diethyl-1,3-propanediol, 2-ethyl-2-isobutyl-1,3-propanediol, 1,2-butanediol, 1,4-butanediol, 1,5-pentanediol, 3-methyl-1,5-pentanediol, 2,2,4-trimethyl-1,3-pentanediol, 1,6-hexanediol, 2-ethyl-1,3-hexanediol, 2,4-dimethyl-2-ethyl-1,3-hexanediol, 2,2,4-trimethyl-1,6-hexanediol, 2-methyl-1,8-octanediol, 1,9-nonanediol, 1,10-decanediol and 1,12-octadecanediol or derivatives thereof.

The diol may be at least one selected from the group consisting of 1,4-butanediol, 1,2-ethanediol, 1,3-propanediol, diethylene glycol and neopentyl glycol or derivatives thereof.

The diol may be at least one selected from the group consisting of 1,4-butanediol, 1,2-ethanediol, 1,3-propanediol or derivatives thereof.

The diol may include 1,4-butanediol or a derivative thereof.

The aromatic dicarboxylic acid may be at least one selected from the group consisting of phthalic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyl dicarboxylic acid, 4,4'-diphenyl ether dicarboxylic acid, anthracen dicarboxylic acid, and phenanthren dicarboxylic acid or derivatives thereof.

The aromatic dicarboxylic acid may be at least one selected from the group consisting of terephthalic acid, dimethyl terephthalate, 2,6-naphthalene dicarboxylic acid, isophthalic acid or derivatives thereof.

The aromatic dicarboxylic acid may include terephthalic acid, dimethyl terephthalate or a derivative thereof.

The aliphatic dicarboxylic acid may be at least one selected from the group consisting of oxalic acid, malonic acid, succinic acid, maleic acid, fumaric acid, glutaric acid, adipic acid, pimelic acid, serveric acid, azelaic acid, sebacic acid, dodecanedicarboxylic acid and 1,4-cyclohexanedicarboxylic acid or derivatives thereof.

The aliphatic dicarboxylic acid may be at least one selected from the group consisting of adipic acid, succinic acid and sebacic acid or derivatives thereof.

The aliphatic dicarboxylic acid may include an adipic acid or a derivative thereof.

In the first biodegradable resin, a molar ratio of all diol residues including the diol : all dicarboxylic acid residues including the aromatic dicarboxylic acid and the aliphatic dicarboxylic acid may be about 1:0.9 to about 1:1.1. A molar ratio

of all diol residues: all dicarboxylic acid residues may be about 1:0.95 to about 1:1.05.

In the first biodegradable resin, a molar ratio of the aromatic dicarboxylic acid residue : the aliphatic dicarboxylic acid residue may be about 3:7 to about 7:3. In the first biodegradable resin, a molar ratio of the aromatic dicarboxylic acid residue : the aliphatic dicarboxylic acid residue may be about 3.3:6.7 to about 6.7:3.3. In the first biodegradable resin, a molar ratio of the aromatic dicarboxylic acid residue : the aliphatic dicarboxylic acid residue may be about 4:6 to about 6:4. In the first biodegradable resin, a molar ratio of the aromatic dicarboxylic acid residue : the aliphatic dicarboxylic acid residue may be about 4.2:5.8 to about 5:5.

The first biodegradable resin may include a diol residue derived from 1,4-butanediol in a content of about 90 mol% or more based on the total diols. The first biodegradable resin may include a diol residue derived from 1,4-butanediol in a content of about 95 mol% or more based on the total diols. The first biodegradable resin may include a diol residue derived from 1,4-butanediol in a content of about 98 mol% or more based on the total diols.

The first biodegradable resin may include an aromatic dicarboxylic acid residue derived from terephthalic acid or dimethyl terephthalate in a content of about 30 mol% to about 70 mol% based on the total dicarboxylic acids. The first biodegradable resin may include an aromatic dicarboxylic acid residue derived from terephthalic acid or dimethyl terephthalate in a content of about 35 mol% to about 65 mol% based on the total dicarboxylic acids. The first biodegradable resin may include a dicarboxylic acid residue derived from terephthalic acid or dimethyl terephthalate in a content of about 40 mol% to about 60 mol% based on the total dicarboxylic acids. The first biodegradable resin may include an aromatic dicarboxylic acid residue derived from terephthalic acid or dimethyl terephthalate in a content of about 43 mol% to about 53 mol% based on the total dicarboxylic acids.

The first biodegradable resin may include an aliphatic dicarboxylic acid residue derived from adipic acid in a content of about 30 mol% to about 70 mol% based on the total dicarboxylic acids. The first biodegradable resin may include an aliphatic dicarboxylic acid residue derived from adipic acid in a content of about 35 mol% to about 65 mol% based on the total dicarboxylic acids. The first biodegradable resin may include an aliphatic dicarboxylic acid residue derived from adipic acid in a content of about 40 mol% to about 60 mol% based on the total dicarboxylic acids. The first biodegradable resin may include an aliphatic dicarboxylic acid residue derived from adipic acid in a content of about 47 mol% to about 57 mol% based on the total dicarboxylic acids.

The number average molecular weight of the first biodegradable resin may be 30,000 g/mol to 50,000 g/mol, 31,000 g/mol to 50,000 g/mol, 32,000 g/mol to 50,000 g/mol, 33,000 g/mol to 50,000 g/mol, 33,000 g/mol to 45,000 g/mol, 33,000 g/mol to 42,000 g/mol, or 33,000 g/mol to 40,000 g/mol.

The weight average molecular weight of the first biodegradable resin may be 60,000 g/mol to 100,000 g/mol, 60,000 g/mol to 95,000 g/mol, 60,000 g/mol to 93,000 g/mol, 63,000 g/mol to 93,000 g/mol, 65,000 g/mol to 93,000 g/mol, or 70,000 g/mol to 90,000 g/mol.

The polydispersity index of the first biodegradable resin may be 1.5 to 3.0, 1.8 to 3.0, 2.0 to 2.8, 2.0 to 2.7, 2.0 to 2.6, or 2.0 to 2.5.

When the above ranges are satisfied, spinning ability may be excellent, and tensile strength may be improved.

The number average molecular weight, weight average molecular weight, and polydispersity index of the first biodegradable resin may be measured the following conditions:

- Analytical instrument: Agilent company 1260 Infinity
- Detector: Agilent company G1362A RI-detector
- Column type: Waters company styragel® HR4 THF 7.8 X 300mm
- Solvent: THF
- Temperature: 40 °C
- Flow rate: 1 mL/min
- Concentration: 4 mg/mL

The biodegradable resin composition according to the present invention may have a melt index. A melt index change value, measured according to the following measurement method, of the biodegradable resin composition according to the present invention is 45 g/10 min or less:

Measurement method

1) a first melt index of the biodegradable resin composition is measured under conditions of 190 °C and 2.16 kg, and a second melt index of the biodegradable resin composition is measured under conditions of 250 °C and 2.16 kg,
2) a melt index change value is derived by Equation 1 below:

Equation 1

$$\text{Melt index change value} = \text{Second melt index} - \text{First melt index}$$

where the first melt index is 6 g/10 min or more.

The melt index change value of the biodegradable resin composition measured according to the measurement method may mean a melt spinning temperature at which the biodegradable resin composition can be spun to produce a biodegradable yarn, and may mean an indicator representing that tensile strength and elongation can be improved because the short-circuiting of the biodegradable yarn can be prevented and plying between the biodegradable yarn can be prevented due to an appropriate crystallization rate.

In addition, a minimum value of the first melt index may be meaningful as an indicator of the spinning ability representing that the biodegradable resin composition can be produced into the biodegradable yarn.

A melt index change value of the biodegradable resin composition according to the measurement method may be 45 g/10 min or less, 42 g/10 min or less, 40 g/10 min or less, 20 g/10 min or more to 40 g/10 min or less, 25 g/10 min or more to 40 g/10 min or less, or 30 g/10 min or more to 40 g/10 min or less.

The amount of the biodegradable resin composition discharged for 10 minutes after being pressed using a weight of about 2.16 kg at about 190 °C may be 6 g/10 min to 25 g/10 min, 6 g/10 min to 20 g/10 min, 8 g/10 min to 20 g/10 min, 10 g/10 min to 20 g/10 min, or 10 g/10 min to 15 g/10 min.

The amount of the biodegradable resin composition discharged for 10 minutes after being pressed using a weight of about 2.16 kg at about 230 °C may be 20 g/10 min to 70 g/10 min, 25 g/10 min to 70 g/10 min, 25 g/10 min to 50 g/10 min, 25 g/10 min to 40 g/10 min, or 30 g/10 min to 40 g/10 min.

The amount of the biodegradable resin composition discharged for 10 minutes after being pressed using a weight of about 2.16 kg at about 250 °C may be 30 g/10 min to 100 g/10 min, 30 g/10 min to 90 g/10 min, 30 g/10 min to 70 g/10 min, 40 g/10 min to 70 g/10 min, or 40 g/10 min to 60 g/10 min.

When the ranges are satisfied, the discharge amount of the biodegradable resin composition during a spinning process is uniform, so that excellent spinning ability may be provided, yarn of a biodegradable nonwoven fabric manufactured from the biodegradable resin composition may not be broken, and tensile strength and elongation may be improved.

The biodegradable resin composition may include an inorganic filler. The inorganic filler may be included in an amount of less than about 10 parts by weight, less than about 8 parts by weight, or less than about 6 parts by weight in the biodegradable resin composition based on 100 parts by weight of the biodegradable resin.

Preferably, the inorganic filler may include titanium dioxide ($TiO_2$). When the biodegradable resin composition is spun, the titanium dioxide may reduce adhesive force between particles of the spun biodegradable resin composition, so that a uniform nano-sized fibrous phase may be formed, and bead formation of a biodegradable nonwoven fabric may be suppressed.

As the titanium dioxide, at least one of TiOi which is full dull (FD), and TiOi which is semi dull (SD) may be used. It is desirable not to use strongly dull bright $TiO_2$. Based on the total weight of the biodegradable resin composition, FD TiOi may be included in a content of 3,000 ppm or more, 5,000 ppm or more, 10,000 ppm or more, 20,000 ppm or more, or 5,000 ppm to 30,000 ppm.

Based on the total weight of the biodegradable resin composition, SD TiOi may be included in a content of 3,000 ppm or more, 3,500 ppm or more, 4,000 ppm or more, 5,000 ppm or more, or 3,000 ppm to 6,000 ppm.

The maximum load of the biodegradable resin composition may be 2 kgf to 5 kgf, 2.5 kgf to 5 kgf, 3 kgf to 5 kgf, or 4 kgf to 4.8 kgf.

The yield strength of the biodegradable resin composition may be 0.5 Mpa to 8 Mpa, 0.5 Mpa to 7 Mpa, 1 Mpa to 7 Mpa, 1.2 Mpa to 7 Mpa, or 1.2 Mpa to 5.4 Mpa.

The elongation of the biodegradable resin composition may be 300 % to 700 %, 350 % to 700 %, 400 % to 700 %, 450 % to 700 %, or 500 % to 700 %.

The maximum load, yield strength and elongation of the biodegradable resin composition may be indicators representing the adhesiveness of the biodegradable resin composition. The maximum load, yield strength, and elongation of the biodegradable resin composition may vary depending upon a content range of titanium dioxide included in the biodegradable resin composition. When the ranges are satisfied, adhesive force between particles of the spun biodegradable resin composition may be reduced, a uniform nano-sized fibrous phase may be formed, and the bead formation of the biodegradable nonwoven fabric may be suppressed.

The maximum load, yield strength, and elongation of the biodegradable resin composition may be measured by the following methods.

After overlapping two specimens with a thickness of 300 $\mu$m made from the biodegradable resin composition, a load of about 3.7 kg may be applied thereto. After pressing the specimens at 130 °C for 30 minutes to be bonded to each

other, measurements may be performed at a tensile speed of 100 mm/min

The biodegradable resin composition may satisfy Relationship 1 below:

Relationship 1

$$MI = 0.625T - 105.35$$

In Relationship 1, MI represents a melt index, and T represents 190 °C to 250 °C.

In Relationship 1, 0.6225 may mean a melt index increase rate of the biodegradable resin composition in a temperature range of 190 °C to 250 °C.

When Relationship 1 is satisfied, a biodegradable yarn may be manufactured in the form of short fiber and/or long fiber by a spinning process, and a biodegradable nonwoven fabric with improved tensile strength and elongation may be manufactured from the short fiber and/or the long fiber.

A method of preparing the biodegradable resin composition according to an embodiment of the present invention includes an operation of performing a first esterification reaction of a first raw material composition including diol and aromatic dicarboxylic acid to prepare a first prepolymer, an operation of performing a second esterification reaction of a second raw material composition including the first prepolymer and aliphatic dicarboxylic acid to prepare a second prepolymer, and an operation of condensation-polymerizing the second prepolymer to prepare a biodegradable resin composition, wherein the biodegradable resin composition has a melt index change value of 45 g/10 min or less according to the following measurement method:

Measurement method

1) a first melt index of the biodegradable resin composition is measured under conditions of 190 °C and 2.16 kg, and a second melt index of the biodegradable resin composition is measured under conditions of 250 °C and 2.16 kg,

2) a melt index change value is derived by Equation 1 below:

Equation 1

$$\text{Melt index change value} = \text{Second melt index} - \text{First melt index}$$

where the first melt index is 6 g/10 min or more.

FIG. 1 schematically illustrates an apparatus for preparing a biodegradable resin composition according to an embodiment of the present invention. Referring to FIG. 1, the apparatus may include a slurry agitator 100, an esterification reaction section 200, a polycondensation reaction section 300, a post-treatment section 400, a first recovery section 510, and a second recovery section 520.

The preparation method according to an embodiment of the present invention includes an operation of performing the first esterification reaction of the first raw material composition including diol and aromatic dicarboxylic acid to prepare the first prepolymer.

The operation may include an operation of manufacturing a slurry containing the diol and the aromatic dicarboxylic acid. The making of the slurry operation may include mixing and processing the diol and the aromatic dicarboxylic acid to form the slurry as pretreatment before the first esterification reaction. The diol may include a biomass-based diol component.

The diol and the aromatic dicarboxylic acid may be fed into and stirred in the slurry agitator 100 to produce the slurry.

By mixing and pretreating the diol and the aromatic dicarboxylic acid to form a slurry, the diol and the aromatic dicarboxylic acid may be uniformly reacted, and this may be effective in rapidly progressing the first esterification reaction, thereby increasing reaction efficiency. In particular, when an aromatic dicarboxylic acid, such as terephthalic acid, has complete crystallinity and is in powder form, its solubility in the diol is very low, making it difficult for a homogeneous reaction to occur. Therefore, the pretreatment process of forming the slurry may play a very important role in obtaining a biodegradable nonwoven fabric with excellent physical properties according to embodiments of the present invention.

When the aromatic dicarboxylic acid is terephthalic acid, the terephthalic acid has perfect crystallinity and is a white crystal that sublimates around 300°C at normal pressure without a melting point, so its solubility in the diol is very low, making it difficult for a homogeneous reaction to occur. Accordingly, if a pretreatment process is performed before the first esterification reaction, a uniform reaction may be induced by increasing the surface area for reaction with diol within a solid matrix of terephthalic acid.

In addition, when the aromatic dicarboxylic acid is dimethyl terephthalic acid, the dimethyl terephthalic acid may be made in a molten state at about 142°C to 170°C by the pretreatment process to react with the diol. Accordingly, the first

esterification reaction may proceed more quickly and efficiently.

In the pretreatment operation of preparing the slurry, the structure and properties of the biodegradable resin composition may vary depending upon the particle size, particle size distribution, pretreatment reaction conditions, etc., of the aromatic dicarboxylic acid.

For example, the aromatic dicarboxylic acid may include terephthalic acid in the form of crystalline particles having a particle size distribution (PSD) with an average particle diameter (D50) of 10 $\mu$m to 400 $\mu$m, as measured by a particle size analyzer Microtrac S3500, with a standard deviation of 100 or less for the average particle diameter (D50). The standard deviation means the square root of the variance. The average particle diameter (D50) of the terephthalic acid may be 20 $\mu$m to 200 $\mu$m, 30 $\mu$m to 180 $\mu$m, or 50 $\mu$m to 150 $\mu$m. When the average particle diameter (D50) of the terephthalic acid satisfies the above ranges, it may be more advantageous in terms of improved solubility in diol and a reaction rate.

In the pretreatment process, the diol and the aromatic dicarboxylic acid may be mixed and fed into the slurry agitator 100 (tank or vessel with an agitator).

For example, the slurry agitator 100 may have an anchor-type bottom and a height of 20 mm or more to an agitator. In addition, the slurry agitator 100 may be equipped with 2 or more rotating blades, which may be more advantageous in achieving an efficient stirring effect.

For example, a height to the slurry agitator 100 may be 20 mm or more, i.e., the supply line and the bottom of the agitator may be almost attached to each other. In this case, a slurry may be obtained without precipitation. If the shape, form, and rotating blades of the agitator do not meet the above conditions, the aromatic dicarboxylic acid may sediment to the bottom when diol and aromatic dicarboxylic acid are initially mixed. In this case, phase separation may occur.

The pretreatment process of preparing the slurry may include an operation of mixing the diol and the aromatic dicarboxylic acid and agitating at about 30°C to about 100°C at about 50 rpm to about 200 for 10 minutes or more, or 10 minutes to 200 minutes.

The diol may have the above-described characteristics.

The diol may be added all at once or in divided doses. For example, the diol may be added separately when mixed with aromatic dicarboxylic acid and when mixed with aliphatic dicarboxylic acid.

The aromatic dicarboxylic acid may have the above-described characteristics.

In the pretreatment operation of preparing the slurry, a molar ratio of the diol to the aromatic dicarboxylic acid may be about 0.8:1 to about 1.2:1. In the pretreatment operation of preparing the slurry, a molar ratio of the diol to the aromatic dicarboxylic acid may be about 0.9:1 to about 1.1:1.

When the diol is added in a larger amount than the aromatic dicarboxylic acid, the aromatic dicarboxylic acid may be easily dispersed.

To the slurry, at least one of the nanocellulose and the metal salt may be added.

The nanocellulose may be pretreated by a bead mill or ultrasonic waves before being added. Specifically, the nanocellulose may be water-dispersed nanocellulose pretreated with a bead mill or pretreated with ultrasonic waves.

Since the nanocellulose includes an ion-bonded metal, its dispersibility in water may be very high. In addition, by the bead mill pretreatment and the ultrasonic pretreatment, an aqueous dispersion with a very high degree of dispersion of the nanocellulose may be obtained. The content of the nanocellulose in the nanocellulose an aqueous dispersion may be about 1 % by weight to about 50 % by weight.

The preparation method according to the present invention includes an operation of performing a second esterification reaction of the second raw material composition including the first prepolymer and aliphatic dicarboxylic acid to prepare a second prepolymer.

The operation may include performing an esterification reaction of the slurry and the aliphatic dicarboxylic acid to prepare a second prepolymer.

The slurry and the aliphatic dicarboxylic acid may be reacted in the esterification reaction section 200.

In the second esterification reaction, a reaction time may be shortened by using the slurry. For example, the slurry obtained in the pretreatment operation may shorten the reaction time of the second esterification reaction by more than 1.5 times.

The second esterification reaction may be performed at least twice. By the second esterification reaction, a second prepolymer to be input into a condensation-polymerization process may be prepared.

After the first esterification reaction, a mixture of the aliphatic dicarboxylic acid and the diol may be fed into the esterification reaction section 200, and, together with the first prepolymer that has been subjected to the first esterification reaction, may be subjected to a second esterification reaction.

The first esterification reaction may be performed at 250 °C or lower for 1.25 hours to 4 hours. Specifically, the first esterification reaction may be performed at 180 °C to 250 °C, 185 °C to 240 °C, or 200 °C to 240 °C under normal or reduced pressure until water as a by-product theoretically reaches 95%. For example, the first esterification reaction may be performed for 1.25 hours to 4 hours, 1.25 hours to 3.5 hours, or 2.5 hours to 3 hours, but the embodiments of the present invention are not limited thereto.

The second esterification reaction may be performed at about 250 °C or lower for 0.25 hours to 3.5 hours.

Specifically, the second esterification reaction may be performed at 180 °C to 250 °C, 185 °C to 240 °C, or 200 °C to 240 °C under normal or reduced pressure until water as a by-product theoretically reaches 95%. For example, the second esterification reaction may be performed for 0.5 hours to 3 hours, 1 hour to 2.5 hours or 1.5 hours to 2.5 hours, but the present invention is not limited thereto.

When the esterification reaction is divided into the first esterification reaction and the second esterification reaction, the entire esterification reaction may be precisely controlled. Accordingly, when the esterification reaction is divided, the reaction stability and reaction uniformity of the esterification reaction may be improved.

By the second esterification reaction, the second prepolymer may be formed.

The number average molecular weight of the second prepolymer may be about 500 g/mol to about 10,000 g/mol. For example, the number average molecular weight of the second prepolymer may be about 500 g/mol to about 8,500 g/mol, about 500 g/mol to about 8,000 g/mol, about 500 g/mol to about 7,000 g/mol, about 500 g/mol to about 5,000 g/mol, or about 800 g/mol to about 3,000 g/mol. When the number average molecular weight of the second prepolymer satisfies the ranges, the molecular weight of the polymer may be efficiently increased in a polycondensation reaction. The number average molecular weight may be measured by the same method as the measurement method described above.

In the second esterification reaction, a titanium-based catalyst and/or a germanium-based catalyst may be used. Specifically, the titanium-based catalyst and/or the germanium-based catalyst may be added to the slurry, and the second esterification reaction may be performed.

In addition, before the first esterification reaction, the titanium-based catalyst and/or the germanium-based catalyst may be added to the slurry, and the germanium-based catalyst may be further added to the first prepolymer.

In the operation, a heat stabilizer may be added.

The heat stabilizer may be fed together with the slurry before the first esterification reaction. The heat stabilizer may be fed into the esterification reaction section 200 during the first esterification reaction. The heat stabilizer may be fed into the esterification reaction product after the first esterification reaction. In addition, the heat stabilizer may be added together with the aliphatic dicarboxylic acid. In addition, the heat stabilizer may be fed into the esterification reaction section 200 after the first esterification reaction and before the second esterification reaction.

The heat stabilizer may be an antioxidant having an oxidation prevention function. The heat stabilizer may be a phosphorus-based heat stabilizer. The heat stabilizer may be at least one selected from the group consisting of an amine-based high-temperature heat stabilizer such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine and the like.

The content of the heat stabilizer may be 3,000 ppm or less based on the total weight of diol, aromatic dicarboxylic acid, and aliphatic dicarboxylic acid. Specifically, the content of the heat stabilizer may be 10 ppm to 3,000 ppm, 20 ppm to 2,000 ppm, 20 ppm to 1,500 ppm or 20 ppm to 1,000 ppm based on the total weight of diol, aromatic dicarboxylic acid, and aliphatic dicarboxylic acid. When the content of the heat stabilizer satisfies the ranges, the deterioration of the polymer due to high temperature during the reaction process may be controlled, so the terminal groups of the polymer may be reduced and the color may be improved.

The preparation method according to embodiments of the present invention includes an operation of condensation-polymerizing the second prepolymer.

After preparing the second prepolymer, one or more selected from the group consisting of an additive such as silica, potassium or magnesium, and a color-correcting agent such as cobalt acetate may be added as a reactant of the second prepolymer, and may be fed together with the second prepolymer into the polycondensation reaction section 300. Accordingly, the additive and/or the color-correcting agent may be uniformly dispersed in the biodegradable resin.

After preparing the second prepolymer, the second prepolymer may be mixed with an inorganic filler.

The inorganic filler may be at least one selected from the group consisting of calcium sulfate, barium sulfate, talc, talc powder, bentonite, kaolinite, chalk powder, calcium carbonate, graphite, gypsum, electrically conductive carbon black, calcium chloride, iron oxide, aluminum oxide, potassium oxide, dolomite, silicon dioxide, wollastonite, titanium dioxide, silicate, mica, glass fiber, mineral fiber, and the like.

In particle diameter distribution obtained by laser diffraction for the inorganic filler, a cumulative $D_{50}$ may be about 100 $\mu$m or less, about 85 $\mu$m or less, about 70 $\mu$m or less, about 50 $\mu$m or less, about 25 $\mu$m or less, about 10 $\mu$m or less, about 5 $\mu$m or less, about 3 $\mu$m or less or about 1 $\mu$m or less.

In addition, the specific surface area of the inorganic filler may be about 100 $m^2$/g or more. For example, the specific surface area of the inorganic filler may be about 100 $m^2$/g or more, about 105 $m^2$/g or more or about 110 $m^2$/g or more.

The inorganic filler may include titanium dioxide ($TiO_2$). When the biodegradable resin composition is spun, the titanium dioxide may reduce adhesive force between particles of the spun biodegradable resin composition, so that a uniform nano-sized fibrous phase may be formed, and bead formation of a biodegradable nonwoven fabric may be suppressed.

As the titanium dioxide, at least one of TiOi which is full dull (FD), and TiOi which is semi dull (SD) may be used. It is

desirable not to use strongly dull bright $TiO_2$. Based on the total weight of the biodegradable resin composition, FD TiOi may be included in a content of 3,000 ppm or more, 5,000 ppm or more, 10,000 ppm or more, 20,000 ppm or more, or 5,000 ppm to 30,000 ppm.

Based on the total weight of the biodegradable resin composition, SD TiOi may be included in a content of 3,000 ppm or more, 3,500 ppm or more, 4,000 ppm or more, 5,000 ppm or more, or 3,000 ppm to 6,000 ppm.

In addition, the first recovery section 510 may recover by-products such as water from the esterification reaction section 200. The first recovery section 510 may recover by-products generated from the esterification by applying vacuum pressure to the esterification reaction section 200 or proceeding with reflux.

The second prepolymer may be fed into the polycondensation reaction section 300. The polycondensation reaction section 300 may be an agitator.

In the agitator, the second prepolymer may be condensation-polymerized for 200 minutes to 400 minutes, 300 minutes to 350 minutes, 280 minutes to 320 minutes, or 290 minutes to 310 minutes.

The Ampere value in the agitator may be greater than 110 and less than 150, 120 or more and less than 150, 130 or more and less than 150, or 135 or more to 145 or less.

The Ampere value may be an indicator of a load applied to the agitator. As the degree of polymerization of the second prepolymer increases, the Ampere value may increase.

The intrinsic viscosity of the condensation-polymerized second prepolymer at 190 °C may be 0.9 dl/g to 2.0 dl/g, 0.95 dl/g to 2.0 dl/g, 0.95 dl/g to 1.9 dl/g, 0.95 dl/g to 1.8 dl/g, or 0.95 dl/g to 1.7 dl/g. The intrinsic viscosity may be an indicator representing the viscosity of the condensation-polymerized second prepolymer.

When the ranges are satisfied, a biodegradable resin having a melt index which can be manufactured into short fiber and/or long fiber by a spinning process may be produced, and a biodegradable nonwoven fabric may be manufactured from the biodegradable resin by a smooth spinning process.

The polycondensation reaction may be performed at about 180 °C to about 280 °C and about 10 torrs or less. The polycondensation reaction may be performed at about 190 °C to about 270 °C, about 210 °C to about 260 °C, or about 230 °C to about 255 °C and about 0.9 torrs or less, about 0.7 torrs or less, about 0.2 torrs to about 10 torr, about 0.3 torrs to about 0.9 torrs or about 0.4 torrs to about 0.6 torr.

The polycondensation reaction may include a first polycondensation and a second polycondensation.

The first polycondensation may be performed at about 260 °C or lower, about 250 °C or lower, about 215 °C to about 250 °C, about 215 °C to about 245 °C, or about 230 °C to about 245 °C, and about 1 torr to about 200 torr, about 2 torrs to about 100 torr, about 4 torrs to about 50 torr, about 5 torrs to about 45 torr, or about 8 torrs to about 32 torr.

In addition, the second polycondensation may be performed at about 220 °C to about 265 °C, about 230 °C to about 260 °C, or about 235 °C to about 255 °C, and about 1 torr or less, about 0.8 torrs or less, about 0.6 torrs or less, about 0.1 torrs to about 1 torr, about 0.3 torrs to about 0.8 torr, or about 0.4 torrs to about 0.6 torr.

A first biodegradable resin prepared by the condensation-polymerization may have a number average molecular weight of 30,000 g/mol to 50,000 g/mol, 31,000 g/mol to 50,000 g/mol, 32,000 g/mol to 50,000 g/mol, 33,000 g/mol to 50,000 g/mol, 33,000 g/mol to 45,000 g/mol, 33,000 g/mol to 42,000 g/mol, or 33,000 g/mol to 40,000 g/mol.

The first biodegradable resin prepared by the condensation-polymerization may have a weight average molecular weight of 60,000 g/mol to 100,000 g/mol, 60,000 g/mol to 95,000 g/mol, 60,000 g/mol to 93,000 g/mol, 63,000 g/mol to 93,000 g/mol, 65,000 g/mol to 93,000 g/mol, or 70,000 g/mol to 90,000 g/mol.

The first biodegradable resin prepared by the condensation-polymerization may have a polydispersity index of 1.5 to 3.0, 1.8 to 3.0, 2.0 to 2.8, 2.0 to 2.7, 2.0 to 2.6, or 2.0 to 2.5.

When the ranges are satisfied, spinning ability may be excellent, and tensile strength may be improved.

The number average molecular weight, weight average molecular weight, and polydispersity index of the first biodegradable resin may be measured in the same manner as the measurement conditions described above.

A biodegradable resin composition prepared by the condensation-polymerization may have a melt index change value of 45 g/10 min or less according to the following measurement method:
Measurement method

1) a first melt index of the biodegradable resin composition is measured under conditions of 190 °C and 2.16 kg, and a second melt index of the biodegradable resin composition is measured under conditions of 250 °C and 2.16 kg,
2) a melt index change value is derived by Equation 1 below:

Equation 1

$$\text{Melt index change value} = \text{Second melt index} - \text{First melt index}$$

where the first melt index is 6 g/10 min or more.

The melt index of the biodegradable resin composition may have the same meaning as the melt index of the biodegradable resin composition described above.

When the ranges are satisfied, the amount of the biodegradable resin composition discharged during a spinning process is uniform, so that excellent spinning ability may be provided, yarn of a biodegradable nonwoven fabric manufactured from the biodegradable resin composition may not be broken, and tensile strength and elongation may be improved.

The second recovery section 520 may recover by-products such as water from the polycondensation reaction section 300. The second recovery section 520 may apply vacuum pressure to the polycondensation reaction section 300, and may recover by-products generated in the polycondensation reaction.

The second recovery section 520 may apply a vacuum pressure of about 0.1 torrs to about 1 torr to the inside of the polycondensation reaction section 300. The second recovery section 520 may apply a vacuum pressure of about 0.1 torrs to about 0.9 torrs to the inside of the polycondensation reaction section 300.

The preparation method according to an embodiment of the present invention may include an operation of manufacturing a pellet from the first biodegradable resin.

Specifically, the first biodegradable resin may be cooled to about 15 °C or lower, about 10 °C or lower, or about 6 °C or lower, and then the cooled first biodegradable resin may be cut and manufactured into a pellet.

The cutting step may be performed using any pellet cutting machine used in the art without limitation, and the pellet may have various shapes. As the pellet cutting method, an underwater cutting method or a strand cutting method may be used.

The pellet may be subjected to an additional post-treatment process. The pellet may be fed into the post-treatment section 400, and the post-treatment process may be performed.

The post-treatment process may be performed in the post-treatment section 400. The pellet may be fed into the post-treatment section 400. Next, the post-treatment section 400 may melt and re-extrude the fed pellet by frictional heat. That is, the post-treatment section 400 may include an extruder such as a twin-screw extruder.

The temperature of the post-treatment process may be about 230°C to about 270°C. The temperature of the post-treatment process may be about 230°C to about 260°C. The temperature of the post-treatment process may be about 240°C to about 265°C. The temperature of the post-treatment process may be about 240°C to about 260°C.

The post-treatment process time may be about 30 seconds to about 3 minutes. The post-treatment process time may be about 50 seconds to about 2 minutes. The post-treatment process time may be about 1 minute to about 2 minutes.

Next, a resin extruded by the extruder may be cooled, cut, and processed into post-treated pellets. That is, the resin extruded from the extruder may be reprocessed into a pellet through the cutting operation described above.

After the pellet is produced, the first biodegradable resin may be compounded with the heterogeneous second biodegradable resin.

The compounding process may be as follows: the first biodegradable resin and the heterogeneous second biodegradable resin may be mixed with at least one of the inorganic filler, the heat stabilizer, the metal salt or the other additives and may be fed into an extruder. The mixed biodegradable resin composition may be melted and mixed about 180 °C to about 260 °C in the extruder. Next, the melt-mixed biodegradable resin composition may be extruded, cooled, cut, and re-palletized. Through this process, it may be complexed with the heterogeneous second biodegradable resin.

A biodegradable molded article according to embodiments of the present invention includes a biodegradable resin composition including a first biodegradable resin including diol, aromatic dicarboxylic acid and aliphatic dicarboxylic acid, and the biodegradable resin composition may have a melt index change value of 45 g/10 min or less according to the following measurement method:
Measurement method

1) a first melt index of the biodegradable resin composition is measured under conditions of 190 °C and 2.16 kg, and a second melt index of the biodegradable resin composition is measured under conditions of 250 °C and 2.16 kg,
2) a melt index change value is derived by Equation 1 below:

Equation 1

$$\text{Melt index change value} = \text{Second melt index} - \text{First melt index}$$

where the first melt index is 6 g/10 min or more.

The first biodegradable resin may be the same as the first biodegradable resin described above.

A biodegradable molded article according to an embodiment the present invention may be a biodegradable nonwoven fabric. The biodegradable nonwoven fabric may include the biodegradable resin composition, and the biodegradable resin composition may include a heterogeneous second biodegradable resin different from the first

biodegradable resin. The heterogeneous second biodegradable resin may include polylactic acid.

The polylactic acid may be a high-melting-point polylactic acid having stereo-complex crystals. In addition, the polylactic acid may be formed by solution-mixing or melt-mixing poly L-lactic acid with poly D-lactic acid.

The polylactic acid may include a unit represented by Formula 1 below:

Formula 1

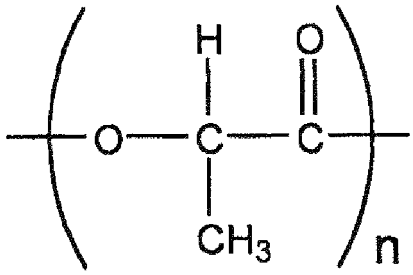

The polylactic acid may be a polymer including an L-lactic acid unit and/or a D-lactic acid unit. The polylactic acid may include poly L-lactic acid and/or poly D-lactic acid.

The poly L-lactic acid may be a polymer including primarily the L-lactic acid unit. The poly L-lactic acid may include the L-lactic acid unit in an amount of approximately 90 mol% to approximately 100 mol%, approximately 95 mol% to approximately 100 mol%, or approximately 97 mol% to approximately 100 mol%. The poly L-lactic acid may include the D-lactic acid unit and/or a unit other than lactic acid. The poly L-lactic acid may include the D-lactic acid unit and/or a unit other than lactic acid in an amount of approximately 0 mol% to approximately 10 mol%, approximately 0 mol% to approximately 5 mol%, or approximately 0 mol% to approximately 3 mol%.

The poly D-lactic acid may be a polymer including primarily the D-lactic acid unit. The poly D-lactic acid may include the D-lactic acid unit in an amount of approximately 90 mol% to approximately 100 mol%, approximately 95 mol% to approximately 100 mol%, or approximately 97 mol% to approximately 100 mol%. The poly D-lactic acid may include the L-lactic acid unit and/or a unit other than lactic acid. The poly D-lactic acid may include the L-lactic acid unit and/or a unit other than lactic acid in an amount of approximately 0 mol% to approximately 10 mol%, approximately 0 mol% to approximately 5 mol%, or approximately 0 mol% to approximately 3 mol%.

The unit other than lactic acid may include units derived from dicarboxylic acids, polyhydric alcohols, hydroxycarboxylic acids, and lactones, which have a functional group capable of forming two or more ester bonds, and units derived from various polyesters, various polyethers, and various polycarbonates, which consist of these various components.

For example, the dicarboxylic acids may include succinic acid, adipic acid, azela phosphoric acid, sebacic acid, terephthalic acid, isophthalic acid, and the like. The polyhydric alcohols may include aliphatic polyhydric alcohols, such as ethylene glycol, propylene glycol, butanediol, pentanediol, hexanediol, octanediol, glycerin, sorbitan, neopentyl glycol, diethylene glycol, triethylene glycol, polyethylene glycol, and polypropylene glycol, and aromatic polyhydric alcohols obtained by adding ethylene oxide to bisphenol.

The hydroxycarboxylic acids may include glycolic acid, hydroxybutyric acid, and the like. For example, the lactones may include glycolide, ε-caprolactone glycolide, ε-caprolactone, β-propiolactone, δ-butyrolactone, β- or γ-butyrolactone, pivalolactone, δ-valerolactone, and the like.

The polylactic acid may be commercially available from Biomer Inc. under the name BIOMER™ L9000. In addition, the polylactic acid may be commercially available from Natureworks LLC (NATUREWORKS®) or Mitsui Chemical (LACEA™). In addition, the polylactic acid may be described in U.S. Patent Nos. 4,797,468; 5,470,944; 5,770,682; 5,821,327; 5,880,254; and 6,326,458, the entire disclosures of which are incorporated in the present disclosure by reference for all purposes.

The melting point of the polylactic acid may be about 100 °C to about 240 °C. The melting point of the polylactic acid may be about 120 °C to about 220 °C. The melting point of the polylactic acid may be about 140 °C to about 200 °C. The melting point of the polylactic acid may be about 140 °C to about 180 °C.

The crystallization temperature (Tc) of the polylactic acid may be about 50 °C to about 80 °C. The crystallization temperature (Tc) of the polylactic acid may be about 55 °C to about 75 °C.

The glass transition temperature (Tg) of the polylactic acid may be about 20 °C to about 80 °C. The glass transition temperature (Tg) of the polylactic acid may be about 30 °C to about 70 °C. The glass transition temperature (Tg) of the polylactic acid may be about 40 °C to about 65 °C. The melting point and the glass transition temperature may be measured by differential scanning calorimetry (DSC) according to ASTM D-3417.

When the polylactic acid has a melting point and glass transition temperature in the above ranges, the

biodegradable molded article according to the embodiments of the present invention may have improved mechanical properties.

The heterogeneous second biodegradable resin may further include one or more selected from the group consisting of polybutylenesuccinate, polybutyleneadipate, polybutylenesuccinate-adipate, polybutylenesuccinate-terephthalate, polyhydroxybutyrate-valerate, polycapro, and polybutylene succinate adipate terephthalate.

The biodegradable resin composition may include an elongation improver.

As the elongation improver, an oil such as paraffin oil, naphthenic oil, or aromatic oil, or an adipate such as dibutyl adipate, diethylhexyl adipate, dioctyl adipate, or diisopropyl adipate may be used. The elongation improver may be included in a content of about 10 ppm to about 10,000 ppm based on the total weight of the biodegradable resin composition. The elongation improver may be included in a content of about 100 ppm to about 10,000 ppm based on the total weight of the biodegradable resin composition. When the ranges are satisfied, mechanical properties of a biodegradable molded article may be improved.

The biodegradable resin composition may include a metal salt.

The metal salt may be included in a content of about 0.1 ppm to about 1,000 ppm based on the total weight of the biodegradable resin composition. The metal salt may be included in a content of about 1 ppm to about 500 ppm based on the total weight of the biodegradable resin composition. The metal salt may be included in a content of about 1 ppm to about 100 ppm based on the total weight of the biodegradable resin composition. The metal salt may be included in a content of about 1 ppm to about 50 ppm based on the total weight of the biodegradable resin composition. When the ranges are satisfied, the biodegradation rate of a biodegradable molded article may be appropriately controlled. The metal salt may be at least one selected from the group consisting of nitrate, sulfate, hydrochloride, carboxylate, and the like. The metal salt may be at least one selected from the group consisting of sodium salt, calcium salt, potassium salt, magnesium salt, copper salt, iron salt, aluminum salt, silver salt, and the like. The metal salt may be at least one selected from the group consisting of magnesium acetate, calcium acetate, potassium acetate, copper nitrate, silver nitrate, sodium nitrate, and the like.

The biodegradable resin composition may include a chain extender.

The chain extender may include isocyanate. The chain extender may be at least one selected from the group consisting of monofunctional isocyanate and polyfunctional isocyanate. The chain extender may be at least one selected from the group consisting of tolylene 2,4-diisocyanate, tolylene 2,6-diisocyanate, diphenylmethane 4,4'-diisocyanate and 2,4'-diisocyanate, naphthalene 1,5-diisocyanate, xylylene diisocyanate, hexamethylene diisocyanate, pentamethylene diisocyanate, isophorone diisocyanate and methylenebis(4-isocyanatocyclohexane). The chain extender may include triisocyanate. The chain extender may include tri(4-isocyanatophenyl)methane.

The chain extender may be chemically bonded to the first biodegradable resin. The chain extender may be chemically combined with a polymer contained in the first biodegradable resin. The chain extender may be bonded to a terminal of a polymer contained in the first biodegradable resin. In addition, the chain extender may be bonded to terminals of three polymers contained in the first biodegradable resin.

The chain extender may be included in a content of about 0.1 % by weight to about 10 % by weight in the biodegradable resin composition based on the total amount of the composition. The chain extender may be included in a content of about 1 % by weight to about 8 % by weight in the biodegradable resin composition based on the total amount of the composition. The chain extender may be included in a content of about 2 % by weight to about 7 % by weight in the biodegradable resin composition based on the total amount of the composition. When the ranges are satisfied, a biodegradable molded article may have appropriate biodegradability.

The chain extender may react with terminal carboxyl groups or unreacted carboxyl groups contained in the biodegradable resin composition. Accordingly, the biodegradable resin composition may have a low acid value.

The chain extender may couple polymers contained in the first biodegradable resin, thereby increasing the ratio of a high-molecular-weight polymer contained in the biodegradable resin composition. Accordingly, the mechanical properties of a biodegradable molded article may be improved.

The biodegradable resin composition may include a plasticizer.

The plasticizer may provide processability, or flexibility to a biodegradable molded article being manufactured. The plasticizer may be glycerol, acrylate, glycerin, glycerol monostearate (GMS), sorbitol or a mixture thereof. The content of the plasticizer may be less than 2.0 % by weight, 1.8 % by weight or less, 1.6 % by weight or less, 1.4 % by weight or less, 1.2 % by weight or less, or 1.0 % by weight or less based on the total weight of the biodegradable resin composition. When the ranges are satisfied, a biodegradable molded article made from the biodegradable resin composition may be imparted with flexibility, and a certain degree of water resistance may be maintained within a user's normal usage period.

The method of manufacturing a biodegradable nonwoven fabric according to an embodiment of the present invention includes an operation of spinning the biodegradable resin composition to manufacture a biodegradable yarn, an operation of cooling the biodegradable yarn, and an operation of combining the cooled biodegradable yarns to form a biodegradable yarn web, wherein the biodegradable resin composition includes a first biodegradable resin, the first biodegradable resin includes diol, aromatic dicarboxylic acid and aliphatic dicarboxylic acid, and the crystallization temperature of the biodegradable resin composition is 70 °C to 130 °C.

The method of manufacturing a biodegradable nonwoven fabric according to an embodiment of the present invention includes an operation of spinning the biodegradable resin composition to manufacture a biodegradable yarn.

The biodegradable resin composition includes the first biodegradable resin. The first biodegradable resin may be the same as the first biodegradable resin described above.

The biodegradable resin composition may further include a second biodegradable resin. The second biodegradable resin may include one or more selected from the group consisting of polybutylenesuccinate, polylactic acid, polybutyleneadipate, polybutylenesuccinate-adipate, polybutylenesuccinate-terephthalate, polyhydroxybutyrate-valerate, polycapro, polybutyleneadipate-co-butylenesuccinate terephthalate and polybutylene succinate adipate terephthalate.

A weight ratio of the first biodegradable resin to the second biodegradable resin may be 1:99 to 30:70, 2:98 to 30:70, 3:97 to 30:70, 4:96 to 30:70, or 5:95 to 30:70. When the ranges are satisfied, the biodegradable resin composition may have excellent spinning ability during a spinning process, and the tensile strength and elongation of a biodegradable nonwoven fabric yarn manufactured may be improved.

The second biodegradable resin may include polylactic acid. The polylactic acid may be the same as the polylactic acid described above.

The biodegradable resin composition may include an inorganic filler. The inorganic filler may be the same as the inorganic filler described above.

The biodegradable resin composition may include a chain extender. The chain extender may be the same as the chain extender described above.

Based on the total weight of the biodegradable resin composition, the chain extender may be included in a content of 1,000 ppm to 5,000 ppm, 1,000 ppm to 4,500 ppm, 1,000 ppm to 4,000 ppm, 1,500 ppm to 4,000 ppm, 1,500 ppm to 3,500 ppm, or 2,000 ppm to 3,500 ppm. When the ranges are satisfied, a biodegradable nonwoven fabric may have appropriate biodegradability.

The chain extender may include isocyanate. The chain extender may be at least one selected from the group consisting of monofunctional isocyanate and polyfunctional isocyanate. The chain extender may be at least one selected from the group consisting of tolylene 2,4-diisocyanate, tolylene 2,6-diisocyanate, diphenylmethane 4,4'-diisocyanate and 2,4'-diisocyanate, naphthalene 1,5-diisocyanate, xylylene diisocyanate, hexamethylene diisocyanate, pentamethylene diisocyanate, isophorone diisocyanate and methylenebis(4-isocyanatocyclohexane). The chain extender may include triisocyanate. The chain extender may include tri(4-isocyanatophenyl)methane. The chain extender may be chemically combined with the first biodegradable resin and/or the second biodegradable resin. The chain extender may be chemically combined with a polymer contained in the first biodegradable resin and/or the second biodegradable resin. The chain extender may be bonded to a terminal of a polymer contained in the first biodegradable resin and/or the second biodegradable resin. In addition, the chain extender may be bonded to terminals of three polymers contained in the first biodegradable resin and/or the second biodegradable resin. The chain extender may also react with terminal carboxyl groups or unreacted carboxyl groups contained in the biodegradable resin composition. Accordingly, the biodegradable resin composition may have a low acid value. In addition, the chain extender may couple polymers contained in the first biodegradable resin and/or the second biodegradable resin, thereby increasing the ratio of a high-molecular-weight polymer contained in the biodegradable resin composition. Accordingly, the mechanical properties of a biodegradable nonwoven fabric may be improved.

The biodegradable resin composition may include an additive.

The additive may include an elongation improver. The additive may include a metal salt. The additive may include a heat stabilizer. The elongation improver, the metal salt, and the heat stabilizer may be the same as the elongation improver, metal salt and heat stabilizer described above.

The biodegradable resin composition may include a reinforcing material.

The reinforcing material may improve the mechanical properties of the biodegradable resin composition and a biodegradable nonwoven fabric made therefrom. In addition, the reinforcing material may control the deformation characteristics of a biodegradable nonwoven fabric due to ultraviolet rays. In addition, the reinforcing material may control the biodegradability of a biodegradable nonwoven fabric.

The reinforcing material may be a fiber derived from biomass. The reinforcing material may be a fiber made of an organic material. The reinforcing material may be nanocellulose.

The nanocellulose may be one or more selected from the group consisting of nanocrystalline cellulose, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose and cyclohexyl cellulose.

The nanocellulose may include an ion-bonded metal. The nanocrystalline cellulose may include elemental sodium, carboxylate sodium salt, etc. In addition, the nanocrystalline cellulose may include sulphate. The nanocrystalline cellulose may include a cellulose hydrogen sulphate sodium salt.

The nanocellulose may be represented by Formula 2 below:

Formula 2

$$\left[ (C_6O_5H_{10})_x\ SO_3Na \right]_y$$

where x is 15 to 35, y is 1 to 10. The nanocellulose may have a specific surface area of about 200 $m^2/g$ to about 600 $m^2/g$. The nanocellulose may have a specific surface area of about 300 $m^2/g$ to about 500 $m^2/g$. The nanocellulose may have a weight average molecular weight of about 10,000 g/mol to about 40,000 g/mol. The nanocrystalline cellulose may have a weight average molecular weight of about 11,000 g/mol to about 35,000 g/mol.

The nanocellulose may have an average diameter of about 0.5 nm to about 10 nm. The nanocellulose may have an average diameter of about 1 nm to about 8 nm. The nanocellulose may have an average diameter of about 1.5 nm to about 7 nm.

The average length of the nanocellulose may be about 20 nm to about 200 nm. The average length of the nanocellulose may be about 30 nm to about 180 nm. The average length of the nanocellulose may be about 35 nm to about 150 nm. When the diameter and length of the nanocellulose satisfy the ranges, the properties of a biodegradable resin composition and a biodegradable nonwoven fabric obtained using the same may be further improved. The diameter and length of the nanocellulose may be measured by atomic force microscopy in a state of being dispersed in water.

The content of sulfate salt in the nanocellulose may be about 0.6 % by weight to about 1.2 % by weight based on the entire nanocrystalline cellulose. The content of sulfate salt in the nanocrystalline cellulose may be about 0.75 % by weight to about 1.1 % by weight based on the entire nanocellulose.

The pH of the nanocellulose may be 5 to 7. The pH of the nanocellulose may be 6 to 7.

The zeta potential of the nanocellulose may be about -25 mV to about -50 mV. The zeta potential of the nanocellulose may be about -30 mV to about -45 mV.

The nanocellulose may be included in a content of about 0.1 parts by weight to about 2 parts by weight based on 100 parts by weight of the biodegradable resin composition. The nanocellulose may be included in a content of about 0.3 parts by weight to about 1.5 parts by weight based on 100 parts by weight of the biodegradable resin composition. The nanocellulose may be included in a content of about 0.5 parts by weight to about 1.2 parts by weight based on 100 parts by weight of the biodegradable resin composition. The nanocellulose may be included in a content of about 0.6 parts by weight to about 1 section by weight based on 100 parts by weight of the biodegradable resin composition.

Since the nanocellulose has the above-mentioned characteristics, it may be uniformly dispersed in the biodegradable resin composition. Since the nanocellulose has the above-mentioned characteristics, the mechanical properties of a biodegradable nonwoven fabric made from the biodegradable resin composition may be improved. Since the nanocellulose has the above-mentioned characteristics, a biodegradable nonwoven fabric made from the biodegradable resin composition may have appropriate UV resistance. Since the nanocellulose has the above-mentioned characteristics, a biodegradable nonwoven fabric made from the biodegradable resin composition may have an appropriate biodegradation rate.

The biodegradable resin composition may include a plasticizer. The plasticizer may be the same as the plasticizer described above.

The biodegradable resin composition may include a heterogeneous biodegradable resin other than the first biodegradable resin and the second biodegradable resin.

The heterogeneous biodegradable resin may be at least one selected from the group consisting of polybutylene azelate terephthalate (PBAzT), polyhydroxybutyrate (PHB), polybutylene succinate (PBS), polybutylene sebacate terephthalate (PBSeT), polybutylene succinate terephthalate (PBST), and polyhydroxyalkanoate (PHA).

The heterogeneous biodegradable resin may be included in a content of about 10 parts by weight to about 100 parts by weight based on 100 parts by weight of the first and second biodegradable resins. The heterogeneous biodegradable resin may be included in a content of about 10 parts by weight to about 60 parts by weight based on 100 parts by weight of the first and second biodegradable resins. The heterogeneous biodegradable resin may be included in a content of about 20 parts by weight to about 50 parts by weight based on 100 parts by weight of the first and second biodegradable resins. When the ranges are satisfied, the mechanical, optical, and chemical properties of the biodegradable resin may be complemented, so that a biodegradable nonwoven fabric made from the biodegradable resin composition may have appropriate UV resistance and an appropriate biodegradation rate.

More specifically, FIG. 1 schematically illustrates an apparatus for preparing a biodegradable resin composition according to another embodiment. Referring to FIG. 1, the apparatus may include a slurry agitator 100, an esterification reaction section 200, a polycondensation reaction section 300, a post-treatment section 400, a first recovery section 510, and a second recovery section 520.

An operation of preparing the biodegradable resin composition may include an operation of preparing a slurry including the diol and the aromatic dicarboxylic acid. The operation of preparing a slurry may be performed in the same

process as The operation of preparing a slurry described above.

The operation may include an operation of performing an esterification reaction of the slurry and the aliphatic dicarboxylic acid to prepare a prepolymer. The operation of preparing a prepolymer may be performed in the same process as the operation of preparing the first prepolymer and the second prepolymer described above.

By the esterification reaction, a prepolymer may be formed.

The number average molecular weight of the prepolymer may be about 500 g/mol to about 10,000 g/mol. For example, the number average molecular weight of the prepolymer may be about 500 g/mol to about 8,500 g/mol, about 500 g/mol to about 8,000 g/mol, about 500 g/mol to about 7,000 g/mol, about 500 g/mol to about 5,000 g/mol, or about 800 g/mol to about 3,000 g/mol. When the number average molecular weight of the prepolymer satisfies the ranges, the molecular weight of the polymer may be efficiently increased in the condensation polymerization reaction.

The number average molecular weight may be measured using gel permeation chromatography (GPC). Specifically, data produced by gel permeation chromatography includes several items such as Mn, Mw, and Mp, but the molecular weight may be measured based on the number average molecular weight (Mn).

The reinforcing material, the polycarbonate diol, the polyether polyol, the metal salt, and the like may be added together with the slurry before the esterification reaction. The reinforcing material, the polycarbonate diol, the polyether polyol, the metal salt, and the like may be fed into the esterification reaction section 200 during the esterification reaction. The reinforcing material, the polycarbonate diol, the polyether polyol, the metal salt, and the like may be fed into the esterification reaction product after the esterification reaction. In addition, the reinforcing material, the polycarbonate diol, the polyether polyol, the metal salt, and the like may be added together with the aliphatic dicarboxylic acid. In addition, the reinforcing material, the polycarbonate diol, the polyether polyol, the metal salt, and the like may be fed into the esterification reaction section 200 after the first esterification reaction and before the second esterification reaction. Since the reinforcing material and the metal salt are fed into the esterification reaction, the reinforcing material and the metal salt may be uniformly dispersed in the biodegradable resin. The reinforcing material may have the above-described characteristics. In particular, the nanocellulose may be used as the reinforcing material.

In the esterification reaction, a titanium-based catalyst and/or a germanium-based catalyst may be used. Specifically, the titanium-based catalyst and/or the germanium-based catalyst may be added to the slurry, and the esterification reaction may proceed.

Before the first esterification reaction, the titanium-based catalyst and/or the germanium-based catalyst may be added to the slurry, and the titanium-based catalyst and/or the germanium-based catalyst may be further added to the product of the first esterification reaction.

The content of the catalyst may be about 100 ppm to 2,000 ppm based on the total weight of diol, aromatic dicarboxylic acid, and aliphatic dicarboxylic acid. For example, a titanium-based catalyst or a germanium-based catalyst may be included in a content of about 100 ppm to about 1,600 ppm, about 150 ppm to about 1,400 ppm, about 200 ppm to about 1,200 ppm or about 250 ppm to about 1,100 ppm. When the content of the catalyst satisfies the range, the properties may be further improved.

The heat stabilizer may be added together with the slurry before the esterification reaction. The heat stabilizer may be the same as the above-described heat stabilizer.

After completion of the esterification, one or more selected from the group consisting of an additive such as silica, potassium or magnesium and a color-correcting agent such as cobalt acetate may be further added to the esterification product.

That is, after completion of the esterification, the additive and/or the color-correcting agent may be added and stabilized, and then a polycondensation reaction may be performed. The additive and/or the color-correcting agent may be added after completion of the esterification reaction and may be fed into the polycondensation reaction section 300 together with the prepolymer.

After completion of the esterification reaction, the inorganic filler may be added to the esterification reaction product. That is, after completion of the esterification reaction, the polycondensation reaction may proceed after the inorganic filler is added and stabilized. The characteristics of the inorganic filler are as described above. The inorganic filler may be fed into the polycondensation reaction section 300 together with the prepolymer, and the condensation-polymerization process may proceed. Accordingly, the inorganic filler may be uniformly dispersed in the biodegradable resin.

The operation may include an operation of performing a polycondensation reaction of the prepolymer. The operation of performing the polycondensation reaction may be performed by the same process as the above-described polycondensation reaction operation.

Before the polycondensation reaction, a titanium-based catalyst or a germanium-based catalyst may be further added to the prepolymer. In addition, before the polycondensation reaction, one or more selected from the group consisting of an additive such as silica, potassium or magnesium; an amine-based stabilizer such as trimethyl phosphate, triphenyl phosphate, trimethyl phosphine, phosphoric acid, phosphorous acid, or tetraethylenepentamine; and a polymerization catalyst such as antimony trioxide, antimony trioxide or tetrabutyl titanate may be further added to the

prepolymer.

The number average molecular weight of the polymer may be about 40,000 g/mol or more. For example, the number average molecular weight of the polymer may be about 43,000 g/mol or more, about 45,000 g/mol or more, or about 50,000 g/mol to about 70,000 g/mol. When the number average molecular weight of the polymer satisfies the range, physical properties, impact resistance, durability and formability may be further improved.

The second recovery section 520 may recover reaction by-products such as water from the polycondensation reaction section 300. The second recovery section 520 may be the same as the second recovery section 520 described above.

The chain extender may be added to the polymer. The polymer and the chain extender may be uniformly mixed and maintained at about 200 °C to about 260 °C for about 1 minute to about 15 minutes.

The operation may include an operation of manufacturing a pellet from the polymer. Specifically, the polymer may be cooled to about 15 °C or lower, about 10 °C or lower, or about 6 °C or lower, and then the cooled polymer may be cut and manufactured into a pellet. The cutting operation may be performed without limitation using any pellet-cutting machine used in the art, and pellets may have various shapes. As a method of cutting the pellets, an underwater cutting method or a strand cutting method may be used. The pellet may be subjected to an additional post-treatment process. The pellet may be fed into the post-treatment section 400, and the post-treatment process may proceed. The post-treatment process may be performed in the post-treatment section 400. The pellet may be fed into the post-treatment section 400. Next, the post-treatment section 400 may melt the input pellets by frictional heat and re-extrude them. That is, the post-treatment section 400 may include an extruder such as a twin-screw extruder. The temperature of the post-treatment process may be about 230 °C to about 270 °C The temperature of the post-treatment process may be about 230 °C to about 260 °C. The temperature of the post-treatment process may be about 240 °C to about 265 °C. The temperature of the post-treatment process may be about 240 °C to about 260 °C. The time of the post-treatment process may be about 30 seconds to about 3 minutes. The time of the post-treatment process may be about 50 seconds to about 2 minutes. The time of the post-treatment process may be about 1 minute to about 2 minutes. Next, a resin extruded by the extruder may be cooled, cut, and processed into a post-treated pellet. That is, the resin extruded from the extruder may be reprocessed into a pellet through the cutting step described above. The crystallinity of the pellet may be improved in the post-treatment process. In addition, the content of the residue included in the pellet may be adjusted in the post-treatment process. In particular, the content of an oligomer contained in the pellet may be controlled by the post-treatment process. The amount of residual solvent contained in the pellet may be controlled by the post-treatment process.

Accordingly, the post-treatment process may appropriately control the mechanical properties, biodegradability, UV resistance, optical properties, or hydrolysis resistance of the biodegradable polyester resin.

After the pellet is produced, the first biodegradable resin and/or the second biodegradable resin may be compounded with the heterogeneous biodegradable resin. In addition, the additive may be compounded with the heterogeneous biodegradable resin.

The prepared biodegradable resin composition may be manufactured into a biodegradable yarn by a spinning process

The spinning process may include a process in which the biodegradable resin composition is melted and introduced into a spinning block. In the spinning block, the melted biodegradable resin composition may be spun from a nozzle of the extruder. By the spinning block, a filament of the biodegradable resin composition may be formed. The filament may be solidified and crystallized by cooling to produce undrawn biodegradable yarn.

A plurality of nozzles may be provided. The number of the nozzles may be 2 to 30, 10 to 30, or 18 to 30. By the plural nozzles, a plurality of filaments may be produced from the biodegradable resin composition. The pressure of the nozzles may be about 220 °C 80 kg/cm$^2$ to 120 kg/cm$^2$, 90 kg/cm$^2$ to 120 kg/cm$^2$, 90 kg/cm$^2$ to 110 kg/cm$^2$, or 95 kg/cm$^2$ to 105 kg/cm$^2$. The spinning temperature in the spinning block may be 180 °C to 250 °C, 190 °C to 250 °C, 190 °C to 240 °C, or 190 °C to 230 °C.

The biodegradable resin composition in the spinning process may have a melt index in a specific range.

Specifically, the amount of the biodegradable resin composition discharged for 10 minutes after being pressed using a weight of about 2.16 kg at about 190 °C may be 1 g/10 min to 25 g/ 10 min, 2 g/ 10 min to 25 g/ 10 min, 3 g/ 10 min to 25 g/ 10 min, 4 g/ 10 min to 25 g/ 10 min, 5 g/10 min to 25 g/10 min, 5 g/10 min to 20 g/10 min, 5 g/10 min to 15 g/10 min, 5 g/10 min to 10 g/10 min, or 6 g/10 min to 10 g/10 min.

The amount of the biodegradable resin composition discharged for 10 minutes after being pressed using a weight of about 2.16 kg at about 230 °C may be 15 g/10 min to 70 g/10 min, 18 g/10 min to 70 g/10 min, 20 g/10 min to 70 g/10 min, 22 g/10 min to 70 g/10 min, 22 g/10 min to 50 g/10 min, 22 g/10 min to 40 g/10 min, or 25 g/10 min to 40 g/10 min.

The amount of the biodegradable resin composition discharged for 10 minutes after being pressed using a weight of about 2.16 kg at about 250 °C may be 20 g/10 min to 100 g/10 min, 25 g/10 min to 100 g/10 min, 30 g/10 min to 100 g/10 min, 30 g/10 min to 90 g/10 min, 30 g/10 min to 70 g/10 min, 30 g/10 min to 60 g/10 min, or 30 g/10 min to 50 g/10 min.

When the ranges are satisfied, the amount of the biodegradable resin composition discharged during a spinning process is uniform, so that excellent spinning ability may be provided, yarn of a biodegradable nonwoven fabric

manufactured from the biodegradable resin composition may not be broken, and tensile strength and elongation may be improved.

A method of manufacturing a biodegradable nonwoven fabric according to an embodiment of the present invention includes an operation of cooling the biodegradable yarn.

The biodegradable yarn may be undrawn biodegradable yarn produced from the biodegradable resin composition.

The cooling may be performed at about 1 °C to 15 °C, 1 °C to 13°C, 2 °C to 13 °C, or 5 °C to 13 °C. The cooling may be performed in a quenching chamber. The length of the quenching chamber may be about 1 m to 5 m, about 1 m to 4 m, about 1 m to 3 m, or about 1 m to 2 m.

When the ranges are satisfied, the phenomenon of adjacent unstretched biodegradable yarns fusing together may be suppressed.

The method of manufacturing a biodegradable nonwoven fabric according to an embodiment of the present invention may further include an operation of drawing the cooled biodegradable yarn.

By the drawing process, biodegradable yarn drawn 1.1 times to 3 times, 1.2 times to 3 times, 1.2 times to 2.7 times, 1.2 times to 2.6 times, or 1.2 times to 2.5 times compared to undrawn biodegradable yarn may be produced.

If necessary, the drawn biodegradable yarn may be thermally treated at an appropriate temperature.

The drawn biodegradable yarn may be wound. The drawn biodegradable yarn may be wound by a winder. The winding speed of the winder may be 300 m/min to 3,000 m/min, 300 m/min to 2,500 m/min, 400 m/min to 2,500 m/min, 500 m/min to 2,500 m/min, or 250 m/min to 2,000 m/min. When the ranges are satisfied, the phenomenon of the biodegradable yarns being fused or disconnected from each other may be suppressed.

The produced biodegradable yarn includes the biodegradable resin composition including the first biodegradable resin, the first biodegradable resin includes diol, aromatic dicarboxylic acid and aliphatic dicarboxylic acid, and the biodegradable resin composition has a crystallization temperature of 70 °C to 130 °C. The crystallization temperature refers to a temperature at which the arrangement of an irregular material structure changes regularly due to the attraction between molecules and/or atoms and its crystallization occurs. The crystallization temperature may vary depending upon the molecular weight and melt index of the biodegradable resin composition. The molecular weight and melt index may vary depending on the inclusion and content ratio of substances such as a chain extender related to increasing molecular weight, an inorganic filler that can act as a crystal nucleating agent, a reinforcing agent, and an additive.

The crystallization temperature may be related to the crystallization rate of the biodegradable resin composition. As the crystallization temperature is lower, a difference from a process temperature at which the biodegradable resin composition is extruded increases, so the rate at which the biodegradable resin composition is crystallized may slow down. Conversely, as the crystallization temperature is higher, a difference from a process temperature at which the biodegradable resin composition is extruded is reduced, so the rate at which the biodegradable resin composition is crystallized may increase. In this way, to continuously manufacture biodegradable yarn from the biodegradable resin composition, the crystallization temperature of the biodegradable resin composition may be an important indicator.

Since the biodegradable resin composition has a crystallization temperature in the range, the biodegradable resin composition may be extruded and quickly crystallized in the process of manufacturing the biodegradable yarn. As a result, short-circuiting of the manufactured biodegradable yarn may be prevented, and plying between the biodegradable yarns may be suppressed due to an appropriate crystallization rate, so tensile strength and elongation may be improved.

The crystallization temperature may be measured according to ASTM D3417. Specifically, the crystallization temperature may be measured by raising from 40 °C to 200 °C at a rate of 10 °C/min using a differential scanning calorimeter (DSC), and then isothermalizing for 5 minutes to perform a first heat history removal process, and then cooling from 200 °C to -50 °C at a rate of 10 °C/min and isothermal for 5 minutes to perform a secondary cooling process.

The crystallization temperature of the biodegradable resin composition may be 70 °C to 130 °C, 75 °C to 130 °C, 80 °C to 130 °C, 85 °C to 130 °C, 90 °C to 130 °C,95 °C to 130 °C, 95 °C to 120 °C, or 95 °C to 110 °C. When the ranges are satisfied, yarn of a biodegradable nonwoven fabric produced from the biodegradable resin composition may not be broken and may include short or long fiber with a uniform diameter, and may have improved tensile strength and elongation.

The biodegradable resin composition may have a melting temperature. The melting temperature of the biodegradable resin composition may be 120 °C to 200 °C, 130 °C to 200 °C, 150 °C to 200 °C, or 150 °C to 190 °C. When the ranges are satisfied, the tensile strength and elongation of a biodegradable nonwoven fabric produced from the biodegradable resin composition may be improved.

The melting temperature may be measured according to the crystallization temperature measurement method described above.

In the biodegradable resin composition, a difference between the melting temperature and the crystallization temperature may be 30 °C to 90 °C, 30 °C to 85 °C, 35 °C to 80 °C, or 40 °C to 75 °C. The difference between the melting temperature and crystallization temperature of the biodegradable resin composition may mean an indicator of the crystallization rate of the biodegradable resin composition. When the ranges are satisfied, excellent radioactivity of the biodegradable resin composition may be secured, and at the same time, plying between the biodegradable yarns

produced may be suppressed.

The maximum load of the biodegradable resin composition may be 2 kgf to 5 kgf, 2.5 kgf to 5 kgf, 3 kgf to 5 kgf, or 4 kgf to 4.8 kgf.

The yield strength of the biodegradable resin composition may be 0.5 Mpa to 8 Mpa, 0.5 Mpa to 7 Mpa, 1 Mpa to 7 Mpa, 1.2 Mpa to 7 Mpa, or 1.2 Mpa to 5.4 Mpa.

The elongation of the biodegradable resin composition may be 300 % to 700 %, 350 % to 700 %, 400 % to 700 %, 450 % to 700 %, or 500 % to 700 %.

The maximum load, yield strength, and elongation of the biodegradable resin composition may be indicators of the adhesiveness of the biodegradable resin composition. The maximum load, yield strength, and elongation of the biodegradable resin composition may vary depending upon a content range of titanium dioxide contained in the biodegradable resin composition. When the ranges are satisfied, adhesive force between particles of the spun biodegradable resin composition may be reduced, so that a uniform nano-sized fibrous phase may be formed, and bead formation of a biodegradable nonwoven fabric may be suppressed.

The maximum load, yield strength, and elongation of the biodegradable resin composition may be measured according to the following methods.

After overlapping two specimens with a thickness of 300 $\mu$m made from the biodegradable resin composition, a load of about 3.7 kg is applied thereto, and they are bonded by pressing at 130 °C for 30 minutes, followed by measurement at a tensile speed of 100 mm/min.

The tensile strength of the biodegradable yarn may be 0.5 g/de to 5.0 g/de, 0.5 g/de to 5.0 g/de, 0.5 g/de to 5.0 g/de, 0.5 g/de to 5.0 g/de, or 1.0 g/de to 3.0 g/de. The elongation of the biodegradable yarn may be 20 % to 400 %, 20 % to 300 %, 25 % to 300 %, 25 % to 250 %, 30 % to 250 %, or 35 % to 200 %. The tensile strength of the biodegradable yarn may be 1.0 g/de to 3.0 g/de, and the elongation thereof may be 35 % to 200 %. When the ranges are satisfied, the biodegradable yarns are easily compressed together, so they may be easily applied to a biodegradable nonwoven fabric, and mechanical strength of the biodegradable nonwoven fabric may be improved.

The biodegradable yarn may have an average diameter of 1 $\mu$m to 500 $\mu$m, 1 $\mu$m to 400 $\mu$m, 1 $\mu$m to 300 $\mu$m, 1 $\mu$m to 200 $\mu$m, or 10 $\mu$m to 100 $\mu$m. When the ranges are satisfied, the biodegradable yarns may be easily pressed together and easily applied as a biodegradable nonwoven fabric, and the mechanical strength of the biodegradable nonwoven fabric may be improved.

The method of manufacturing a biodegradable nonwoven fabric according to embodiment of the present invention includes an operation of combining the cooled biodegradable yarns to form a biodegradable yarn web.

The method of combining the biodegradable yarns may be a carding, air laid, water suspension, or spun bond process.

The carding process may refer to a process in which the biodegradable yarn is stacked on a collector to form a biodegradable yarn web using a device including a plurality of gear wheels.

The air laid process may refer to a process in which the biodegradable yarn is arranged on a collector to form a biodegradable yarn web using a device moved by a flow of air.

The water suspension process may refer to a process in which the biodegradable yarn is dispersed in water, transported on a wire screen or a perforated drum, and then residual moisture of the transferred biodegradable yarn is sucked, pressurized, and dried to form a biodegradable yarn web.

The spun bond process may refer to a process in which the biodegradable yarn is formed into a Venturi web on a collector and then formed into a biodegradable yarn web.

The method of manufacturing a biodegradable nonwoven fabric according to embodiments of the present invention may further include an operation of combining the biodegradable yarn webs by at least one process of needle punch, spun lace, stitch bond, calendaring, and air through bonding.

By the process, bonding force between the biodegradable yarn webs may be strengthened, tensile strength and elongation may be improved, and fluffing of the biodegradable nonwoven fabric may be prevented.

The needle punch process may refer to a process in which a needle penetrates the biodegradable yarn web and the biodegradable yarns are entangled with each other by the barbs of the needle.

The spun lace process may refer to a process in which the biodegradable yarn web is combined by spraying a high-pressure water stream on one side and absorbing the high-pressure water stream on the other side.

The stitch bond process may refer to a process in which the biodegradable yarn web is joined by sewing thread and a needle.

The calendaring process may refer to a process of pressurizing the biodegradable yarn web and then thermosetting it.

The air through bonding process may refer to a process of bonding the biodegradable yarn web by high-temperature hot air.

By the process, a biodegradable nonwoven fabric may be manufactured. The biodegradable nonwoven fabric includes a biodegradable yarn with an average diameter of 10 $\mu$m to 100 $\mu$m, the biodegradable yarn includes a

biodegradable resin composition including a first biodegradable resin, the first biodegradable resin includes diol, aromatic dicarboxylic acid and aliphatic dicarboxylic acid, and the biodegradable resin composition may have a crystallization temperature of 70 °C to 130 °C.

The biodegradable yarn, the first biodegradable resin and the biodegradable resin composition may be the same as the biodegradable yarn, first biodegradable resin and biodegradable resin composition described above.

The biodegradable nonwoven fabric includes yarn with an average diameter of 1 $\mu$m to 500 $\mu$m, 1 $\mu$m to 400 $\mu$m, 1 $\mu$m to 300 $\mu$m, 1 $\mu$m to 200 $\mu$m, or 10 $\mu$m to 100 $\mu$m. A biodegradable nonwoven fabric containing yarn having the diameter range is lightweight, has excellent strength, and has high surface area and porosity, so it may be applied to products that require hygroscopicity.

The electrical resistance of the biodegradable resin composition in a molten state may be 1 MΩ to 15 MS2, 1 MS2 to 14 MS2, 1 MS2 to 13 MS2, 1 MS2 to 12 MS2, 1 MS2 to 11 MS2, 1 MS2 to 10 MS2, 2 MS2 to 10 MS2, or 3 MΩ to 10 MS2. When the ranges are satisfied, a biodegradable nonwoven fabric is lightweight and has high surface area and porosity, so it may be applied to products that require hygroscopicity.

The biodegradable nonwoven fabric may be processed. The biodegradable nonwoven fabric may be treated with an antistatic agent to prevent static electricity. The biodegradable nonwoven fabric may be water-repellent treated with a hydrophobic material. The biodegradable nonwoven fabric may be antibacterially treated with an antibacterial material.

The biodegradable nonwoven fabric may be embossed. The biodegradable nonwoven fabric may be printed. The biodegradable nonwoven fabric may be embossed or printed to a thickness and size appropriate for an article to which it is applied.

Hereinafter, the embodiments of the present invention will be described in more detail based on the following examples and comparative examples. However, the examples and comparative examples are provided only as examples to describe the embodiments of the present invention in more detail, and the embodiments are not limited by the following examples and comparative examples.

## First example

### Preparation Example

### Preparation of pretreated nanocellulose

Dry powder-type cellulose nanocrystals (NVC-100, Manufacturer: Celluforce) having a particle size of about 1 $\mu$m to about 50 $\mu$m were dispersed in water at 1 % by weight, and then sonicated at an output of 20,000 J/s for 1 minute using a tip-type ultrasonic disperser, thereby producing pretreated nanocellulose.

### Preparation of PBAT resin

### Preparation of PBAT resin #1

- First operation: Pretreating to obtain slurry

In a catalyst-free state, the nanocellulose pretreated according to the preparation example, 1,4-butanediol (1,4-BDO) and terephthalic acid (TPA) were mixed and fed into a slurry tank (the bottom of the slurry tank was an anchor type, the height to an agitator was 40 mm, and three rotary blades were provided). Here, a molar ratio of the 1,4-butanediol (1,4-BDO) to the terephthalic acid (TPA) was 1.4:1, and the $D_{50}$ of the terephthalic acid (TPA) was 130 $\mu$m. The mixture fed into the slurry tank was stirred at 60°C and 100 rpm for 1 hour, and a slurry was obtained without phase separation.

- Second operation: Obtaining prepolymer

The slurry obtained in the first operation was fed into a reactor through a supply line, a titanium-based catalyst, tetrabutyl titanate (Dupont, manufactured by Tyzor TnBT), was fed at 250 ppm based on the total weight of the slurry into the reactor, and then performing first esterification at 220°C under normal pressure for about 1 hour and 30 minutes until 95% of by-product water was discharged.

To the first esterification reaction product, 53 mol% of 1,4-butanediol (1,4-BDO) based on the total number of moles of the diol component, 53 mol% of adipic acid (AA) based on the total number of moles of the dicarboxylic acid component, and 200 ppm of a titanium-based catalyst, tetrabutyl titanate (Dupont, manufactured by Tyzor TnBT), based on the total weight of moles of the diol and dicarboxylic acid components were added. Next, a second esterification reaction was performed at 220°C and under normal pressure for about 2 hours 30 minutes until 95% of by-product water was discharged, thereby producing a prepolymer having a number average molecular weight of 5,500 g/mol.

- Third operation: Performing polycondensation reaction

150 ppm of a titanium-based catalyst, tetrabutyl titanate (Dupont, manufactured by Tyzor TnBT), and 500 ppm of a triethylene phosphate stabilizer were added based on the total weight of the prepolymer produced in the second operation, and then stabilized for about 10 minutes. Next, after raising the temperature to 240 °C, a polycondensation reaction was

performed under 0.5 torrs for 2 hours, thereby producing a polymer having a number average molecular weight of 34,000 g/mol. Next, the polymer was cooled to 5 °C and cut with a pellet cutter, thereby obtaining PBAT resin #1 pellet.

**Production of PBAT resins #2 to #5**

PBAT resin #2 to #5 pellets were manufactured in the same process as in the production process of the PBAT resin #1, except that components and contents shown in the following Table 1 and the temperatures and times of the first and second esterification reactions and the temperatures and times of the polycondensation reaction shown in the following Table 2 were used.

Table 1

| Classification | 1,4-BDO1) | TPA2) | AA3) | CNC4) |
|---|---|---|---|---|
| Unit | mol % | | | ppm5) |
| PBAT resin #1 | 140 | 47 | 52 | 500 |
| PBAT resin #2 | 130 | 48 | 51 | 200 |
| PBAT resin #3 | 135 | 48 | 52 | 100 |
| PBAT resin #4 | 135 | 50 | 53 | 300 |
| PBAT resin #5 | 140 | 49 | 51 | 600 |

1) 1,4-BDO: 1,4-butanediol
2) TPA: terephthalic acid
3) AA: adipic acid
4) CNC: pretreated nanocellulose
5) ppm: Based on total weight of 1,4-BDO, TPA and AA

Table 2

| Classification | First esterification reaction | | Second esterification reaction | | Polycondensation reaction | |
|---|---|---|---|---|---|---|
| | Temperature | Time | Temperature | Time | Temperature | Time |
| Unit | °C | min | °C | min | °C | min |
| PBAT resin #1 | 220 | 90 | 220 | 150 | 240 | 300 |
| PBAT resin #2 | 210 | 90 | 210 | 150 | 240 | 305 |
| PBAT resin #3 | 220 | 90 | 220 | 150 | 240 | 310 |
| PBAT resin #4 | 210 | 90 | 210 | 150 | 250 | 300 |
| PBAT resin #5 | 230 | 90 | 230 | 150 | 250 | 305 |

**Preparation of biodegradable resin composition**

**Preparation of biodegradable resin composition #1**

A raw material composition was prepared using components and contents shown in the following Table 3. Next, the raw material composition was fed into a T-die extrusion molding device (ϕ 20 mm, L/D=25, manufactured by Toyo Seiki Seisaku-sho, Ltd.) as an extrusion molding machine equipped with a twin screw, and kneaded at 160 °C, thereby producing a pelletized biodegradable resin composition #1.

**Preparation of biodegradable resin compositions #2 to #7**

Biodegradable resin compositions #2 to #7 were prepared in the same process as in the preparation process of the biodegradable resin composition #1, except that components and contents shown in the following Table 3 were used.

Table 3

| Classification | PBAT | PLA1) | Chain extender2) |
|---|---|---|---|
| Unit | % by weight | | ppm3) |
| Biodegradable resin composition #1 | PBAT resin #1 5 | 95 | 0.3 |
| Biodegradable resin composition #2 | PBAT resin #2 10 | 90 | 0.3 |
| Biodegradable resin composition #3 | PBAT resin #3 15 | 85 | 0.3 |
| Biodegradable resin composition #4 | PBAT resin #4 20 | 80 | 0.3 |
| Biodegradable resin composition #5 | PBAT resin #5 30 | 70 | 0.3 |
| Biodegradable resin composition #6 | - | 100 | - |
| Biodegradable resin composition #7 | PBAT resin #1 100 | - | - |

1) PLA: Natureworks LLC, 4032D
2) Chain extender: BASF company, Joncryl ADR 4400
3) ppm: Content of chain extender compared to total weight of biodegradable resin composition

**Example 1-1**

The biodegradable resin composition #1 was melted and fed into a spinning block. Next, a biodegradable yarn was manufactured from the biodegradable resin composition #1 under the spinning conditions shown in the following Table 4. Next, the biodegradable yarn was unwound to a carrier film and heat-pressed to produce a biodegradable nonwoven fabric.

**Examples 1-2 to 1-5 and Comparative Examples 1-1 to 1-2**

Biodegradable nonwoven fabrics were produced in the same process as in Example 1-1, except that biodegradable resin composition types and process conditions shown in the following Table 4 were used.

Table 4

| Classification | Biodegradable resin composition | Spinning block nozzles | Pressure of spinning block nozzles 1) | Spinning temperature | Cooling device (quenching chamber) length | Screw temperature | Winding speed | Elongation ratio |
|---|---|---|---|---|---|---|---|---|
| Unit | - | fila | kg/cm 2 | °C | m | °C | m/min | % |
| Example 1-1 | Biodegradable resin composition #1 | 24 | 85 | 230 | 1.5 | 230 | 2,000 | 200 |
| Example 1-2 | Biodegradable resin composition #2 | 24 | 85 | 230 | 1.5 | 230 | 1,500 | 150 |
| Example 1-3 | Biodegradable resin composition #3 | 24 | 85 | 230 | 1.5 | 230 | 1,000 | 130 |

(continued)

| Classification | Biodegradable resin composition | Spinning block nozzles | Pressure of spinning block nozzles 1) | Spinning temperature | Cooling device (quenching chamber) length | Screw temperature | Winding speed | Elongation ratio |
|---|---|---|---|---|---|---|---|---|
| Example 1-4 | Biodegradable resin composition #4 | 24 | 85 | 230 | 1.5 | 230 | 1,000 | 130 |
| Example 1-5 | Biodegradable resin composition #5 | 24 | 85 | 230 | 1.5 | 230 | 500 | 130 |
| Comparative Example 1-1 | Biodegradable resin composition #6 | 24 | 85 | 230 | 1.5 | 230 | 500 | 200 |
| Comparative Example 1-2 | Biodegradable resin composition #7 | 24 | 85 | 230 | 1.5 | 230 | -2) | -3) |
| 1) Pressure of spinning block nozzles: Based on 230 °C<br>2),3) -: Spinning process did not proceed due to thread failure | | | | | | | | |

**First experimental example**

**Experimental Example 1-1 - Crystallization temperature ($T_c$) and melting temperature ($T_m$)**

For each of the biodegradable resin compositions #1 to #7, the crystallization temperature and melting temperature were measured according to ASTM D3417. Specifically, Using a differential scanning calorimeter (DSC), the temperature was raised from 40 °C to 200 °C at a rate of 10 °C/min, and then isothermal for 5 minutes to perform the first heat history removal process. The second cooling process was performed by cooling from 200 °C to -50 °C at a rate of 10 °C/min and isothermal for 5 minutes. Through these processes, the crystallization temperature and the melting temperature were confirmed. Results are shown in the following Table 5.

**Experimental Example 1-2 - Average diameter**

The average diameter of each of the biodegradable nonwoven fabric yarns manufactured in Examples 1-1 to 1-5 and Comparative Examples 1-1 to 1-2 were measured using an electron microscope (SEM). Results are shown in the following Table 5.

**Experimental Example 1-3 - Flowability**

For each of the biodegradable resin compositions #1 to #7, flowability discharged from the spinning block was evaluated based on the following criteria. Results are shown in the following Table 5.

- Suitable: The amount discharged from the spinning block was uniform.
- Unsuitable: The amount discharged from the spinning block was not uniform.

**Experimental Example 1-4 - Processability**

For each of the biodegradable nonwoven fabric yarns manufactured in Examples 1-1 to 1-5 and Comparative Examples 1-1 to 1-2, processability was evaluated based on the following criteria. Results are shown in Table 5 below.

- ◦: Yarn was produced in excess of 1,000 m without interruption.
- △: Yarn was broken within 1,000 m.
- ×: Thread was cut and a spinning process did not proceed.

**Experimental Example 1-5 - Shape**

The shape of each of the biodegradable nonwoven fabric yarns manufactured in Examples 1-1 to 1-5 and Comparative Examples 1-1 to 1-2 was measured using an electron microscope (SEM), and the processability thereof was evaluated based on the following criteria. Results are shown in the following Table 5.

- o: Continuous fibrous shape, no beads present
- ×: Beads and fibers mixed

**Experimental Example 1-6 - Tensile strength and elongation**

For each of the biodegradable nonwoven fabric yarns manufactured in Examples 1-1 to 1-5 and Comparative Examples 1-1 to 1-2, a tensile strength and an elongation were measured using a tensile tester available from Instron company under conditions of a temperature of 20 °C and a humidity of 65 %. Here, the length of the biodegradable yarn was 20 cm, and after gripping the biodegradable yarn under an initial load of about 1.0 cN/tex, a moving clamp was set at a stretching speed of 100% per minute. The tensile strength and elongation of the biodegradable yarn were measured five times while stretching the biodegradable yarn until it was broken, and the average value is shown in the following Table 5.

**Experimental Example 1-7 - Biodegradability**

Each of the biodegradable resin compositions #1 to #7 was manufactured into flakes with a thickness of 300 $\mu$m and a size of 30 mm × 30 mm, and the initial number average molecular weight of the flakes was measured using the gel permeation chromatography.

Next, the flakes were placed at a temperature of 60 °C and a humidity of 90 % for 63 days under the following compost conditions, and then the number average molecular weight thereof was measured. A value obtained by dividing a difference between the initial number average molecular weight and the number average molecular weight after 63 days by the initial number average molecular weight was derived as a biodegradability. Results are shown in Table 5 below.

- Manufacturer: Taeheung F&G
- Product name: Geosangto (grade 1 compost by-product fertilizer)
- Compost ingredients: 40% by weight of pig manure, 15% by weight of chicken manure, 37% by weight of sawdust, 5% by weight of zeolite, 3% by weight of microbial agent

**Experimental Example 1-8 - Melt index**

Each of the biodegradable resin compositions #1 to #7 was pressed using a weight of 2.16 kg at 190 °C, 230 °C or 250 °C, and then a discharge amount was measured for 10 minutes. Results are shown in the following Table 5.

Table 5

| Classificatio n | Un it | Examp le 1-1 | Examp le 1-2 | Examp le 1-3 | Examp le 1-4 | Examp le 1-5 | Comparat ive Example 1-1 | Comparat ive Example 1-2 |
|---|---|---|---|---|---|---|---|---|
| Crystallizatio n temperature | °C | 99 | 101 | 100 | 101 | 99 | 140 | 43 |
| Melting temperature | | 173 | 173 | 173 | 173 | 173 | 173 | 121 |
| Average dia-meter | $\mu$m | 15 | 15.5 | 16 | 16.3 | 16.5 | 28.5 | N.A.1) |

(continued)

| Classification | Unit | Example 1-1 | Example 1-2 | Example 1-3 | Example 1-4 | Example 1-5 | Comparative Example 1-1 | Comparative Example 1-2 |
|---|---|---|---|---|---|---|---|---|
| Flowability | - | Suitable | Suitable | Suitable | Suitable | Suitable | Unsuitable | Suitable |
| Processability | | ○ | ○ | ○ | ○ | ○ | Δ | × |
| Shape | | ○ | ○ | ○ | ○ | ○ | × | N.A. |
| Tensile strength | g/de | 1.93 | 1.87 | 1.65 | 1.41 | 1.25 | 1.20 | N.A. |
| Elongation | % | 53 | 71 | 83 | 89 | 92 | 25 | N.A. |
| Biodegradability | % | 90 | 90 | 90 | 90 | 90 | 85 | 90 |
| First MI2) | g/10 min | 7.1 | 7.6 | 7.3 | 7.4 | 6.7 | 7.4 | 10.4 |
| Second MI3) | | 35.2 | 34.3 | 28.7 | 27.7 | 27.6 | 34.5 | 34.5 |
| Third MI4) | | 47.1 | 39.7 | 38.2 | 34.2 | 42.0 | 61.1 | 60.2 |
| 1) N.A.: Not measured<br>2) First MI: Melt index at 190 °C<br>3) Second MI: Melt index at 230 °C<br>4) Third MI: Melt index at 250 °C | | | | | | | | |

As shown in Table 5, it was confirmed that the biodegradable resin compositions of Examples 1-1 to 1-5 satisfied a crystallization temperature in a specific range compared to the biodegradable resin compositions of Comparative Examples 1-1 to 1-2, so that the amounts of the biodegradable resin compositions discharged during the spinning process were uniform, thereby having excellent spinning ability. In addition, it was confirmed that the biodegradable nonwoven fabric yarns manufactured from the biodegradable resin compositions of Examples 1-1 to 1-5 were not broken, contained short fibers or long fibers with a uniform diameter, and had excellent tensile strength and elongation.

**Second example**

**Preparation example**

**Preparation of pretreated nanocellulose**

Dry powder-type cellulose nanocrystals (NVC-100, manufacturer: Celluforce) with a particle size of about 1 $\mu$m to about 50 $\mu$m were dispersed in water at 1 % by weight, and then sonicated for 2 minutes at an output of 20,000 J/s using a tip-type ultrasonic disperser, thereby producing pretreated nanocellulose.

**Preparation of biodegradable resin composition**

**Preparation of Example 1**

- First operation: Pretreating to obtain slurry

In a catalyst-free state, the nanocellulose pretreated according to the preparation example, 1,4-butanediol (1,4-BDO) and terephthalic acid (TPA) were mixed and fed into a slurry tank. The bottom of the slurry tank was an anchor type, the height to an agitator was 40 mm, and three rotary blades were provided. A molar ratio of the 1,4-butanediol (1,4-BDO) to the terephthalic acid (TPA) was 1.4:1, and the $D_{50}$ of the terephthalic acid (TPA) was 130 $\mu$m. The mixture fed into the slurry tank was stirred at 60°C and 100 rpm for 1 hour, and a slurry was obtained without phase separation.

- Second operation: Obtaining a prepolymer

The slurry obtained in the first operation was fed into a reactor through a supply line, a titanium-based catalyst, tetrabutyl titanate (Dupont, manufactured by Tyzor TnBT), was fed at 250 ppm based on the total weight of the slurry into

the reactor, and then performing first esterification at 220°C under normal pressure for about 1 hour and 30 minutes until 95% of by-product water was discharged, thereby preparing a first prepolymer.

To the first prepolymer, 53 mol% of 1,4-butanediol (1,4-BDO) based on the total number of moles of the diol component, 53 mol% of adipic acid (AA) based on the total number of moles of the dicarboxylic acid component, and 200 ppm of a titanium-based catalyst, tetrabutyl titanate (Dupont, manufactured by Tyzor TnBT), based on the total weight of moles of the diol and dicarboxylic acid components were added. Next, a second esterification reaction was performed at 220°C and under normal pressure for about 2 hours 30 minutes until 95% of by-product water was discharged, thereby producing a second prepolymer having a number average molecular weight of 5,500 g/mol.

- Third operation: Performing polycondensation reaction

150 ppm of a titanium-based catalyst, tetrabutyl titanate (Dupont, manufactured by Tyzor TnBT), and 500 ppm of a triethylene phosphate stabilizer based on the total weight of the second prepolymer were added to an agitator, and then stabilized for about 10 minutes. Next, the temperature of the agitator was raised to 240 °C, and then a polycondensation reaction was performed while stirring under a condition of 0.5 torr. The polycondensation reaction was performed until the Ampere value in the agitator reached 140. Here, the intrinsic viscosity of the condensation-polymerized second prepolymer at 190 °C was 1.6 dl/g. The polycondensation reaction was performed for 300 minutes, and a polymer having a number average molecular weight of 34,000 g/mol was produced. The number average molecular weight was measured by the measurement method of Experimental Example 2 below.

Next, the polymer was cooled to 5 °C and cut with a pellet cutter, thereby obtaining a biodegradable resin composition.

**2. Preparation of Examples 2 to 5 and Comparative Preparation Examples 1 to 2**

Biodegradable resin compositions were prepared in the same process as in the process of Preparation Example 1, except that components and contents shown in Table 6 below, and stirring conditions and polycondensation reaction temperatures and times shown in Table 7 below were used.

Table 6

| Classification | 1,4-BDO1) | TPA2) | AA3) | CNC4) |
|---|---|---|---|---|
| Unit | mol % | | | ppm5) |
| Preparation Example 1 | 140 | 47 | 53 | 900 |
| Preparation Example 2 | 140 | 48 | 52 | 800 |
| Preparation Example 3 | 135 | 50 | 52 | 500 |
| Preparation Example 4 | 135 | 48 | 53 | 600 |
| Preparation Example 5 | 140 | 49 | 51 | 900 |
| Comparative Preparation Example 1 | 135 | 50 | 51 | 900 |
| Comparative Preparation Example 2 | 140 | 52 | 53 | 900 |
| 1) 1,4-BDO: 1,4-butanediol<br>2) TPA: Terephthalic acid<br>3) AA: Adipic acid<br>4) CNC: Pretreated nanocellulose<br>5) ppm: Based on total weight of 1,4-BDO, TPA and AA | | | | |

Table 7

| Classification | Agitator condition | Condensation-polymerization condition | | Polymer | |
|---|---|---|---|---|---|
| | Maximum Ampere value | Temperature | Time | Number average molecular weight | Intrinsic viscosity1) |
| Unit | - | °C | min | g/mol | dl/g |
| Preparation Example 1 | 140 | 240 | 300 | 34,000 | 1.5 |
| Preparation Example 2 | 125 | 240 | 295 | 33,500 | 1.6 |
| Preparation Example 3 | 130 | 240 | 300 | 33,800 | 1.5 |
| Preparation Example 4 | 130 | 240 | 310 | 36,000 | 1.4 |
| Preparation Example 5 | 135 | 240 | 305 | 35,000 | 1.4 |
| Comparative Preparation Example 1 | 160 | 240 | 270 | 28,500 | 0.6 |
| Comparative Preparation Example 2 | 100 | 240 | 330 | 41,000 | 2.1 |
| 1) Intrinsic viscosity: Intrinsic viscosity at 190 °C | | | | | |

**Example 2-1**

The biodegradable resin composition and polylactic acid (Natureworks LLC, 4032D) according to Preparation Example 1 were melt-spun through nozzles at 230 °C. Here, a weight ratio of the biodegradable resin composition to polylactic acid was 3:7. Next, a cooling process was performed in a cooling bath at about 23 °C, thereby being produced into biodegradable yarns. In addition, the cooled biodegradable yarns were combined, thereby being manufactured into a biodegradable nonwoven fabric with a thickness of about 0.5 mm.

**Examples 2-2 to 2-5**

Biodegradable yarns and a biodegradable nonwoven fabric were manufactured in the same process as in the process of Example 2-1, except that the biodegradable resin composition according to each of Preparation Examples 2 to 5 was used instead of the biodegradable resin composition of Preparation Example 1 and was melt-spun under a temperature condition shown in Table 8 below.

**Comparative Examples 2-1 to 2-2**

Biodegradable yarns and a biodegradable nonwoven fabric were manufactured in the same process as in the process of Example 2-1, except that the biodegradable resin composition according to each of Comparative Preparation Examples 1 to 2 was used instead of the biodegradable resin composition of Preparation Example 1 and was melt-spun under a temperature condition shown in Table 8 below.

**Comparative Example 2-3**

The biodegradable resin composition according to Comparative Preparation Example 2-1 was melted at about 240 °C, and then spun through nozzles. However, since a biodegradable yarn was cut off in a spinning process, a biodegradable nonwoven fabric was not produced.

**Second experimental example**

**Experimental Example 2-1 - Melt index**

Each of the biodegradable resin compositions prepared in Preparation Examples 1 to 5 and Comparative Preparation Examples 1 to 3 was pressed using a weight of 2.16 kg at 190 °C or 250 °C, and then a discharge amount thereof was measured for 10 minutes. Results are shown in Table 8 below.

**Experimental Example 2-2 - Number average molecular weight, weight average molecular weight, and polydispersity index**

For each of the biodegradable resin compositions produced in Preparation Examples 1 to 5 and Comparative Preparation Examples 1 to 3, the number average molecular weight, weight average molecular weight and polydispersity index were measured under the following conditions, and results are shown in Table 8 below:

- Analytical instrument: Agilent company 1260 Infinity
- Detector: Agilent company G1362A RI-detector
- Column type: Waters company styragel® HR4 THF 7.8 × 300mm
- Solvent: THF
- Temperature: 40 °C
- Flow rate: 1 mL/min
- Concentration: 4 mg/mL

**Experimental Example 2-3 - Biodegradability**

Each of the biodegradable resin compositions prepared in Preparation Examples 1 to 5 and Comparative Preparation Examples 1 to 3 was manufactured into flakes with a thickness of 300 $\mu$m and a size of 30 mm × 30 mm, and the initial number average molecular weight of the flakes was measured under the same conditions as in Experimental Example 2-2.

Next, the flakes were placed at a temperature of 60 °C and a humidity of 90 % for 63 days under the following compost conditions, and then the number average molecular weight thereof was measured. A value obtained by dividing a difference between the initial number average molecular weight and the number average molecular weight after 63 days by the initial number average molecular weight was derived as a biodegradability. Results are shown in Table 8 below.

- Manufacturer: Taeheung F&G
- Product name: Geosangto (grade 1 compost by-product fertilizer)
- Compost ingredients: 40% by weight of pig manure, 15% by weight of chicken manure, 37% by weight of sawdust, 5% by weight of zeolite, 3% by weight of microbial agent

**Experimental Example 2-4 - Tensile strength and elongation**

For each of the biodegradable yarns of Examples 2-1 to 2-5 and Comparative Examples 2-1 to 2-3, a tensile strength and an elongation were measured using a tensile tester available from Instron company under conditions of a temperature of 20 °C and a humidity of 65 %. Here, the length of the biodegradable yarn was 20 cm, and after gripping the biodegradable yarn under an initial load of about 1.0 cN/tex, a moving clamp was set at a stretching speed of 100% per minute. The tensile strength and elongation of the biodegradable yarn were measured five times while stretching the biodegradable yarn until it was broken, and the average value is shown in the following Table 8.

**Experimental Example 2-5 - Processability**

For each of the biodegradable yarns of Examples 2-1 to 2-5 and Comparative Examples 2-1 to 2-3, processability was evaluated based on the following criteria. Results are shown in Table 8 below.

- o: Biodegradable yarn was produced in excess of 1,000 m without interruption.

- △: Biodegradable yarn was broken within 1,000 m.

- ×: Thread was cut and a spinning work did not proceed.

**Experimental Example 2-6 - Yarn uniformity**

For each of the biodegradable yarns of Examples 2-1 to 2-5 and Comparative Examples 2-1 to 2-3, yarn uniformity was evaluated based on the following criteria. Results are shown in Table 8 below.

- o: Biodegradable yarns showed a continuous fiber form, and no plying occurred.

- △: Biodegradable yarns showed a continuous fiber form, but some plying occurred.

- ×: Biodegradable yarns were plyed and a micron ribbon was formed.

**Experimental Example 2-7** - **Nonwoven fabric shape**

Whether each of the biodegradable nonwoven fabrics manufactured in Examples 2-1 to 2-5 and Comparative Examples 2-1 to 2-3 maintained the shape thereof was evaluated based on the following criteria, and results are shown in Table 8 below.

- o: Nonwoven fabric shape maintained.
- ×: Nonwoven fabric shape not maintained.

Table 8

| Classification | Unit | Example 2-1 | Example 2-2 | Example 2-3 | Example 2-4 | Example 2-5 | Comparative Example 2-1 | Comparative Example 2-2 | Comparative Example 2-3 |
|---|---|---|---|---|---|---|---|---|---|
| Biodegradable resin composition | - | Preparation Example 1 | Preparation Example 2 | Preparation Example 3 | Preparation Example 4 | Preparation Example 5 | Comparative Preparation Example 1 | Comparative Preparation Example 2 | Comparative Preparation Example 1 |
| Spinning temperature | °C | 230 | 200 | 220 | 210 | 220 | 270 | 180 | 230 |
| First MI[1)] | g/10 min | 13.4 | 13.6 | 13.5 | 11.2 | 13.1 | 29 | 4.4 | 29 |
| Second MI[2)] | | 50.9 | 51.0 | 51.0 | 45.2 | 49.8 | 104.1 | 26.5 | 104.1 |
| ΔMI[3)] | | 37.5 | 37.4 | 37.5 | 34.0 | 36.7 | 75.1 | 22.1 | 75.1 |
| Mn[4)] | g/mol | 34,000 | 33,500 | 33,800 | 36,000 | 35,000 | 28,500 | 41,000 | 28,500 |
| Mw[5)] | | 80,000 | 79,000 | 79,500 | 86,500 | 83,000 | 62,000 | 95,000 | 62,000 |
| PDI[6)] | - | 2.35 | 2.33 | 2.28 | 2.30 | 2.31 | 2.03 | 2.32 | 2.25 |
| Biodegradability | % | 90 | 90 | 90 | 90 | 90 | 90 | 90 | 90 |
| Tensile strength | g/de | 1.25 | 1.44 | 1.38 | 1.21 | 1.22 | 0.55 | 0.88 | N.A.[7)] |
| Elongation | % | 92 | 88 | 90 | 95 | 94 | 70 | 55 | N.A. |
| Processability | - | ○ | ○ | ○ | ○ | ○ | Δ | Δ | × |
| Yarn uniformity | | ○ | ○ | ○ | ○ | ○ | Δ | × | N.A. |
| Nonwoven fabric shape | | ○ | ○ | ○ | ○ | ○ | × | × | N.A. |

1) First MI: Melt index at 190 °C
2) Second MI: Melt index at 250 °C
3) ΔMI: Second MI - first MI
4) Mn: Number average molecular weight

(continued)

| Classifica tion | Un it | Exam ple 2-1 | Exam ple 2-2 | Exam ple 2-3 | Exam ple 2-4 | Exam ple 2-5 | Compa rative Examp le 2-1 | Compa rative Examp le 2-2 | Compa rative Examp le 2-3 |
|---|---|---|---|---|---|---|---|---|---|
| 5) Mw: Weight average molecular weight<br>6) PDI: Polydispersity index<br>7) N.A.: Not measured | | | | | | | | | |

As shown in Table 8, it was confirmed that the biodegradable resin compositions of Examples 2-1 to 2-5 satisfied a specific melt index range in a melt spinning temperature range compared to the biodegradable resin compositions of Comparative Examples 2-1 to 2-3, so that the amounts of the biodegradable resin compositions discharged during the spinning process were uniform, thereby having excellent spinning ability. In addition, it was confirmed that the biodegradable nonwoven fabric yarns manufactured from the biodegradable resin compositions of Examples 2-1 to 2-5 were uniform, were not broken, and had excellent tensile strength and elongation.

[Industrial Applicability]

Embodiments of the present invention can be applied to a method of manufacturing a biodegradable nonwoven fabric, a biodegradable yarn and a biodegradable nonwoven fabric including the same. In addition, the embodiments can be applied to a biodegradable resin composition, a method of preparing the same, and a biodegradable molded article manufactured thereby. Furthermore, the embodiments may be combined to form additional embodiments.

## Claims

1. An eco-friendly biodegradable resin composition comprising: a first biodegradable resin comprising diol, aromatic dicarboxylic acid and aliphatic dicarboxylic acid,
   wherein the biodegradable resin composition has a melt index change value of 45 g/10 min or less according to a measurement method below:
   Measurement method

   1) a first melt index of the biodegradable resin composition is measured under conditions of 190 °C and 2.16 kg, and a second melt index of the biodegradable resin composition is measured under conditions of 250 °C and 2.16 kg, and
   2) a melt index change value is derived by Equation 1 below:

   $$\text{Equation 1}$$
   $$\text{Melt index change value} = \text{Second melt index} - \text{First melt index}$$

   where the first melt index is 6 g/10 min or more.

2. The eco-friendly biodegradable resin composition according to claim 1, wherein the biodegradable resin composition satisfies Relationship 1 below:

   $$\text{Relationship 1}$$
   $$MI = 0.625T - 105.35$$

   where MI denotes a melt index, and T is 190 °C to 250 °C.

3. A method of preparing an eco-friendly biodegradable resin composition, the method comprising:

   preparing a first prepolymer by performing a first esterification reaction of a first raw material composition comprising diol and aromatic dicarboxylic acid;

preparing a second prepolymer by performing a second esterification reaction of a second raw material composition comprising the first prepolymer and aliphatic dicarboxylic acid; and
preparing a biodegradable resin composition by condensation-polymerizing the second prepolymer,
wherein the biodegradable resin composition has a melt index change value of 45 g/10 min or less according to a measurement method below:
Measurement method

1) a first melt index of the biodegradable resin composition is measured under conditions of 190 °C and 2.16 kg, and a second melt index of the biodegradable resin composition is measured under conditions of 250 °C and 2.16 kg,
2) a melt index change value is derived by Equation 1 below:

Equation 1

$$\text{Melt index change value} = \text{Second melt index} - \text{First melt index}$$

where the first melt index is 6 g/10 min or more.

**4.** The method according to claim 3, wherein, in the preparing the biodegradable resin composition, the second prepolymer is condensation-polymerized for 280 minutes to 320 minutes in a slurry agitator with an agitator.

**5.** The method according to claim 4, wherein an Ampere value in the agitator is greater than 110 and less than 150.

**6.** The method according to claim 3, wherein an intrinsic viscosity of the condensation-polymerized second prepolymer at 190 °C is 0.9 dl/g to 2.0 dl/g.

**7.** An eco-friendly biodegradable molded article comprising: a biodegradable resin composition comprising a first biodegradable resin that comprises diol, aromatic dicarboxylic acid and aliphatic dicarboxylic acid,
wherein the biodegradable resin composition has a melt index change value of 45 g/10 min or less according to a measurement method below:
Measurement method

1) a first melt index of the biodegradable resin composition is measured under conditions of 190 °C and 2.16 kg, and a second melt index of the biodegradable resin composition is measured under conditions of 250 °C and 2.16 kg,
2) a melt index change value is derived by Equation 1 below:

Equation 1

$$\text{Melt index change value} = \text{Second melt index} - \text{First melt index}$$

where the first melt index is 6 g/10 min or more.

**8.** An eco-friendly biodegradable yarn comprising: a biodegradable resin composition including a first biodegradable resin,

wherein the first biodegradable resin comprises diol, aromatic dicarboxylic acid and aliphatic dicarboxylic acid, and
the biodegradable resin composition has a crystallization temperature of 70 °C to 130 °C.

**9.** The eco-friendly biodegradable yarn according to claim 8, wherein the biodegradable resin composition comprises a second biodegradable resin, and
wherein the second biodegradable resin comprises one or more selected from the group consisting of polybutylenesuccinate, polylactic acid, polybutyleneadipate, polybutylenesuccinate-adipate, polybutylenesuccinate-terephthalate, polyhydroxybutyrate-valerate, polycapro, polybutyleneadipate-co-butylenesuccinate terephthalate and polybutylene succinate adipate terephthalate.

**10.** The eco-friendly biodegradable yarn according to claim 9, wherein a weight ratio of the first biodegradable resin to the second biodegradable resin is 5:95 to 50:50.

**11.** The eco-friendly biodegradable yarn according to claim 8, wherein a chain extender includes a content of 1,000 ppm to 5,000 ppm based on a total weight of the biodegradable resin composition.

**12.** The eco-friendly biodegradable yarn according to claim 8, wherein the biodegradable yarn has a tensile strength of 1.0 g/de to 3.0 g/de and an elongation of 35 % to 200 %.

**13.** The eco-friendly biodegradable yarn according to claim 8, wherein a difference between a melting temperature of the biodegradable resin composition and the crystallization temperature thereof is 40 °C to 75 °C.

**14.** A method of manufacturing an eco-friendly biodegradable nonwoven fabric, the method comprising:

spinning a biodegradable resin composition to manufacture biodegradable yarns;
cooling the biodegradable yarns; and
combining the cooled biodegradable yarns to form a biodegradable yarn web,
wherein the biodegradable resin composition includes a first biodegradable resin, the first biodegradable resin comprises diol, aromatic dicarboxylic acid and aliphatic dicarboxylic acid, and the biodegradable resin composition has a crystallization temperature of 70 °C to 130 °C.

**15.** An eco-friendly biodegradable nonwoven fabric comprising: a biodegradable yarn having an average diameter of 10 $\mu$m to 100 $\mu$m,

wherein the biodegradable yarn includes a biodegradable resin composition comprising a first biodegradable resin,
the first biodegradable resin comprises diol, aromatic dicarboxylic acid and aliphatic dicarboxylic acid, and
the biodegradable resin composition has a crystallization temperature of 70 °C to 130 °C.

【FIG. 1】

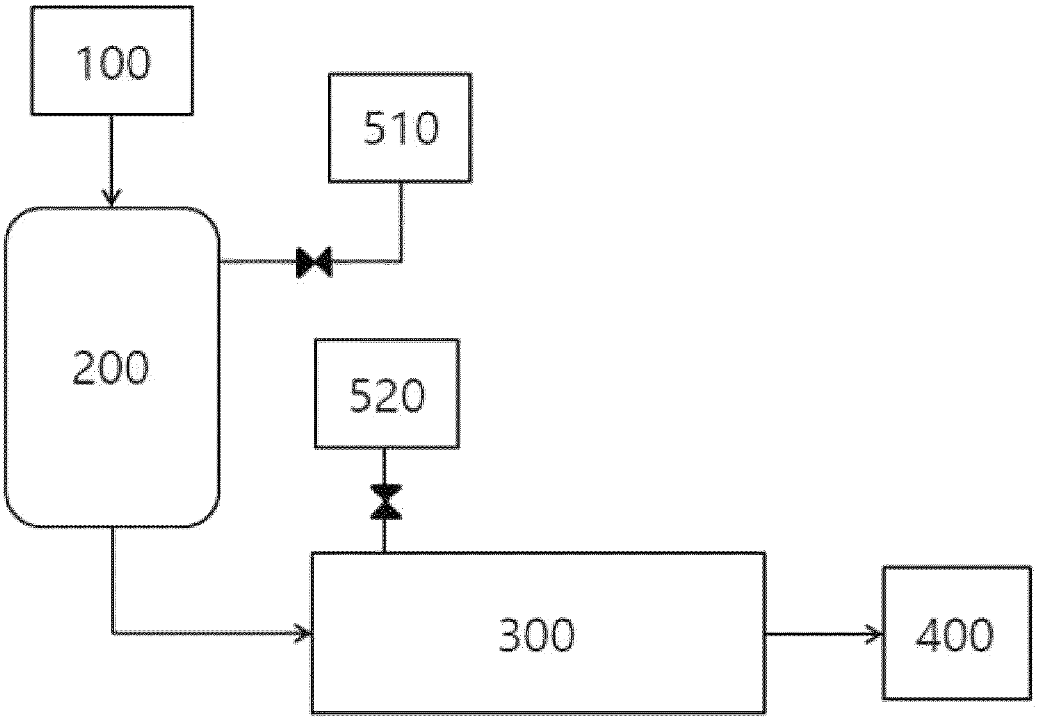

Europäisches Patentamt
European Patent Office
Office européen des brevets

# EUROPEAN SEARCH REPORT

Application Number
EP 24 19 0246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 095 180 A1 (ECOVANCE CO LTD [KR]) 30 November 2022 (2022-11-30)<br>* Examples *<br>* Claims * | 1-7 | INV.<br>C08G63/183<br>C08L67/04<br>D01F6/84<br>D01F8/14 |
| X | US 2021/380757 A1 (KIM KYUNG YOUN [KR] ET AL) 9 December 2021 (2021-12-09)<br>* Examples *<br>* Claims * | 1-7 | |
| X | US 2012/220687 A1 (BASTIOLI CATIA [IT] ET AL) 30 August 2012 (2012-08-30)<br>* examples 3,7; table 1 *<br>* Claims * | 8-15 | |
| X | CN 107 794 593 B (CHINA PETROLEUM & CHEM CORP ET AL.) 27 November 2020 (2020-11-27)<br>* example 1; table 3 *<br>* paragraph [0066] *<br>* Claims * | 8-15 | TECHNICAL FIELDS SEARCHED (IPC) |
| A | US 2011/059669 A1 (HE AIMIN [US] ET AL) 10 March 2011 (2011-03-10)<br>* Examples *<br>* Claims * | 1-15 | D01F<br>C08G<br>C08L |

1

The present search report has been drawn up for all claims

| Place of search | Date of completion of the search | Examiner |
|---|---|---|
| The Hague | 16 December 2024 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 0246

This annex lists the patent family members relating to the patent documents cited in the above-mentioned European search report. The members are as contained in the European Patent Office EDP file on The European Patent Office is in no way liable for these particulars which are merely given for the purpose of information.

16-12-2024

| Patent document cited in search report | Publication date | Patent family member(s) | Publication date |
|---|---|---|---|
| EP 4095180 A1 | 30-11-2022 | CN 115386072 A | 25-11-2022 |
| | | EP 4095180 A1 | 30-11-2022 |
| | | JP 7291268 B2 | 14-06-2023 |
| | | JP 2022181205 A | 07-12-2022 |
| | | JP 2023058640 A | 25-04-2023 |
| | | KR 102431671 B1 | 12-08-2022 |
| | | KR 20220159255 A | 02-12-2022 |
| | | KR 20230058600 A | 03-05-2023 |
| | | TW 202246381 A | 01-12-2022 |
| | | US 2022389154 A1 | 08-12-2022 |
| | | US 2023257516 A1 | 17-08-2023 |
| US 2021380757 A1 | 09-12-2021 | CN 113736069 A | 03-12-2021 |
| | | EP 3916036 A1 | 01-12-2021 |
| | | JP 7282124 B2 | 26-05-2023 |
| | | JP 2021188038 A | 13-12-2021 |
| | | US 2021380757 A1 | 09-12-2021 |
| | | WO 2021241931 A1 | 02-12-2021 |
| US 2012220687 A1 | 30-08-2012 | AT E401374 T1 | 15-08-2008 |
| | | AT E410458 T1 | 15-10-2008 |
| | | AT E462744 T1 | 15-04-2010 |
| | | AT E509057 T1 | 15-05-2011 |
| | | AU 2006224682 A1 | 21-09-2006 |
| | | BR PI0611457 A2 | 14-09-2010 |
| | | CA 2601181 A1 | 21-09-2006 |
| | | CA 2601183 A1 | 21-09-2006 |
| | | CA 2601519 A1 | 21-09-2006 |
| | | CA 2601522 A1 | 21-09-2006 |
| | | CN 101142255 A | 12-03-2008 |
| | | CN 101142256 A | 12-03-2008 |
| | | CN 101142276 A | 12-03-2008 |
| | | CN 101283020 A | 08-10-2008 |
| | | CN 103087299 A | 08-05-2013 |
| | | EG 25733 A | 19-06-2012 |
| | | EP 1858951 A1 | 28-11-2007 |
| | | EP 1858978 A1 | 28-11-2007 |
| | | EP 1863860 A1 | 12-12-2007 |
| | | EP 1863861 A1 | 12-12-2007 |
| | | EP 2163567 A2 | 17-03-2010 |
| | | EP 2287224 A1 | 23-02-2011 |
| | | ES 2310913 T3 | 16-01-2009 |
| | | ES 2316056 T3 | 01-04-2009 |
| | | ES 2342192 T3 | 02-07-2010 |
| | | ES 2365532 T3 | 06-10-2011 |
| | | ES 2661949 T3 | 04-04-2018 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 24 19 0246

This annex lists the patent family members relating to the patent documents cited in the above-mentioned European search report. The members are as contained in the European Patent Office EDP file on
The European Patent Office is in no way liable for these particulars which are merely given for the purpose of information.

16-12-2024

| Patent document cited in search report | Publication date | Patent family member(s) | Publication date |
|---|---|---|---|
| | | ES 2662017 T3 | 05-04-2018 |
| | | HK 1118845 A1 | 20-02-2009 |
| | | HK 1118846 A1 | 20-02-2009 |
| | | HK 1118850 A1 | 20-02-2009 |
| | | JP 5011274 B2 | 29-08-2012 |
| | | JP 5052496 B2 | 17-10-2012 |
| | | JP 5264474 B2 | 14-08-2013 |
| | | JP 2008533255 A | 21-08-2008 |
| | | JP 2008533256 A | 21-08-2008 |
| | | JP 2008536961 A | 11-09-2008 |
| | | KR 20070122486 A | 31-12-2007 |
| | | NO 344336 B1 | 04-11-2019 |
| | | PL 1858951 T3 | 30-09-2010 |
| | | PL 1858978 T3 | 30-01-2009 |
| | | PL 1863860 T3 | 30-04-2009 |
| | | PL 1863861 T3 | 31-10-2011 |
| | | PL 2163567 T3 | 31-07-2018 |
| | | PL 2287224 T3 | 31-07-2018 |
| | | TR 201803019 T4 | 21-03-2018 |
| | | UA 89401 C2 | 25-01-2010 |
| | | US 2008188593 A1 | 07-08-2008 |
| | | US 2008194770 A1 | 14-08-2008 |
| | | US 2008214702 A1 | 04-09-2008 |
| | | US 2009005472 A1 | 01-01-2009 |
| | | US 2012219740 A1 | 30-08-2012 |
| | | US 2012220687 A1 | 30-08-2012 |
| | | US 2012220698 A1 | 30-08-2012 |
| | | US 2012225230 A1 | 06-09-2012 |
| | | WO 2006097353 A1 | 21-09-2006 |
| | | WO 2006097354 A1 | 21-09-2006 |
| | | WO 2006097355 A1 | 21-09-2006 |
| | | WO 2006097356 A1 | 21-09-2006 |
| CN 107794593 B | 27-11-2020 | NONE | |
| US 2011059669 A1 | 10-03-2011 | AT E506472 T1 | 15-05-2011 |
| | | AU 2007358034 A1 | 26-02-2009 |
| | | BR PI0721925 A2 | 08-04-2014 |
| | | CN 101784711 A | 21-07-2010 |
| | | EP 2181213 A1 | 05-05-2010 |
| | | KR 20100045483 A | 03-05-2010 |
| | | US 2011059669 A1 | 10-03-2011 |
| | | WO 2009024836 A1 | 26-02-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4797468 A
- US 5470944 A
- US 5770682 A
- US 5821327 A
- US 5880254 A
- US 6326458 B